# EUROPEAN PATENT APPLICATION

(11) **EP 4 776 589 A1**
(43) Date of publication of application: **15.07.2026**
(21) Application number: 24881483.2
(22) Date of filing: 15.10.2024
(51) Int. Cl.: H04L 41/14

(54) **METHOD, APPARATUS AND SYSTEM FOR MODEL TRAINING**

(30) Priority: 23.10.2023 CN 202311376105
(71) Applicant: HUAWEI TECHNOLOGIES CO., LTD., Shenzhen 518129 (CN)
(72) Inventor: HUANG, Xietian, Shenzhen, Guangdong 518129 (CN); CAO, Longyu, Shenzhen, Guangdong 518129 (CN)
(74) Representative: Isarpatent
(86) International application number: PCT/CN2024/125046
(87) International publication number: WO 2025/087117

(57) **Abstract**

Embodiments of the present disclosure provide a model training method, an apparatus, and a system. The method may include: A network management device obtains training data used to train a first part of a two-side model, where the two-side model includes the first part to be deployed on a network device and a second part to be deployed on a terminal device; performs model training based on the training data to obtain the first part; and sends the first part to the network device. For example, the second part may be trained by a server or the network management device. In this manner, the network management device on a management plane can assist in a training process of the two-side model of an air interface. Specifically, at least the first part is trained and deployed on the network device, facilitating use of the two-side model of the air interface.

## Description

This application claims priority to Chinese Patent Application No. 202311376105.2, filed with the China National Intellectual Property Administration on October 23, 2023 and entitled "MODEL TRAINING METHOD, APPARATUS, AND SYSTEM", which is incorporated herein by reference in its entirety.

### TECHNICAL FIELD

Embodiments of the present disclosure relate to the communication field, and more specifically, to a model training method, an apparatus, a system, and a computer-readable storage medium.

### BACKGROUND

To improve network intelligence and automation, artificial intelligence (Artificial Intelligence, AI) and machine learning (Machine Learning, ML) technologies are being applied in more fields. Within the 3rd generation partnership project (3rd Generation Partnership Project, 3GPP), multiple working groups are exploring related standardization topics related to network intelligence. For example, the 3GPP radio access network (Radio Access Network, RAN) working group is discussing topics including AI/ML algorithm research for a new radio (new radio, NR) air interface,with the focus on using AI/ML-based algorithms to enhance the air interface and to improve its performance. AI/ML can be applied in two ways through the air interface: one-side AI or two-side AI. If a model is deployed on either an access network device or a terminal device, and model inference is performed by the side where the model is deployed, this AI model usage mode is referred to as one-side AI, and the correspondingly model is a one-side AI model. If a model is divided into two parts, deployed separately on an access network device and a terminal device, and both sides use their respective parts to perform inference and collaboratively complete an inference task, this AI model usage mode is referred to as two-side AI, and the correspondingly model is a two-side AI model.

A two-side AI model includes a part deployed on an access network device (for example, referred to as a decoder model) and a part deployed on a terminal device (for example, referred to as an encoder model). How to obtain a two-side AI model through training still requires further research.

### SUMMARY

Embodiments of the present disclosure provide a model training solution, and specifically, provide a training solution for a two-side AI model.

According to a first aspect of the present disclosure, a model training method is provided. The method may include: obtaining training data used to train a first part of a two-side model, where the two-side model includes the first part to be deployed on a network device and a second part to be deployed on a terminal device; performing model training based on the training data to obtain the first part; and sending the first part to the network device.

In this embodiment of the present disclosure, the method may be performed by a network management device. In this manner, the network management device on a management plane can assist in a training process of the two-side model of an air interface. Specifically, the first part is trained and deployed on the network device, to support use of the two-side model of the air interface.

In some implementations, the method may further include: performing lightweight processing on the first part, so that the lightweight-processed first part meets at least one of the following: a performance requirement for the first part, an energy consumption requirement for training the first part, an energy consumption requirement for an inference task using the first part, or a first model size requirement for the first part. In this manner, the lightweight processing may be performed on a premise that a requirement for the model is ensured, to compress the model. In this way, a computation amount, a size, and the like of the model can be reduced.

For example, the method may be performed by a second network management device, for example, an element management system (element management system, EMS).

In some implementations, obtaining the training data used to train the first part of the two-side model includes: receiving a first training request from a first network management device, where the first training request indicates to train the first part of the two-side model, and the first training request includes the training data used to train the first part of the two-side model and structure information of the first part. In this manner, model training can be performed based on the first training request from the first network management device by using the training data and the structure information that are provided by the first network management device, so that the first part matching the second part can be obtained.

In some implementations, the method may further include: sending a first model training report to the first network management device, where the first model training report includes at least one of the following: a model identifier of the two-side model, a model identifier of the first part, actual performance of the first part, actual training energy consumption of the first part, estimated energy consumption of the inference task using the first part, or an actual model size of the first part. In this manner, the first model training report is sent to the first network management device, so that the first network management device can determine that the training of the first part has been completed, and can further learn of the training of the first part, for example, the actual energy consumption or the actual model size.

In some implementations, obtaining the training data used to train the first part of the two-side model includes: obtaining, from the network device, the training data used to train the first part. For example, the method further includes: receiving the first training request from the first network management device, where the first training request is used to request to train the first part of the two-side model, and further requests training data used to train the second part. For example, performing the model training based on the training data to obtain the first part includes: obtaining, based on the first training request, the first part through training by using the training data used to train the first part; and determining structure information of the second part, and constructing the training data used to train the second part. For example, the method may further include: sending the first model training report to the first network management device, where the first model training report includes the training data used to train the second part and the structure information of the second part. In this manner, the training data used to train the second part and the structure information of the second part may be subsequently provided for a server, and the server obtains the second part through training.

In some implementations, obtaining the training data used to train the first part of the two-side model includes: obtaining, from the network device, the training data used to train the first part and the training data used to train the second part. For example, during model training, the first part and the second part may be obtained based on the training data. In this manner, the two parts of the two-side model may be obtained by the network management device through training, thereby reducing signaling exchange.

In some implementations, the method may further include: receiving a model loading request from the first network management device, where the model loading request indicates to load the first part to the network device; and sending the first part to the network device based on the model loading request. In this manner, the first part may be loaded to the network device based on the model loading request from the first network management device. This can ensure that the network device uses the first part as a part of the two-side model, rather than as a one-side model.

In some implementations, the model loading request may include at least one of the following: a first identifier of the network device, the model identifier of the first part, a second identifier of the terminal device, a model identifier of the second part, or the model identifier of the two-side model.

In some implementations, the first training request further includes at least one of the following: the model identifier of the two-side model, the model identifier of the first part, the model identifier of the second part, the first identifier of the network device, the second identifier of the terminal device, indication information indicating a type of inference task using the two-side model, a performance requirement for the two-side model, an energy consumption requirement for training the two-side model, the energy consumption requirement for the inference task, the first model size requirement for the first part, or a lightweight indication.

In this way, matching and an association between the first part and the second part can be determined by carrying the model identifier of the first part and/or the model identifier of the second part in the request, and specific two parties that are used to deploy the two-side model can be determined by carrying the identifier of the network device and/or the identifier of the terminal device in the request. The first training request carries the requirement for the model and the like, so that an actual available resource can be considered in the training process, and availability of the trained model can be ensured.

In some implementations, the method may further include: receiving a request message from the first network management device, where the request message is used to request state information of the network device; and sending a response message to the first network management device in response to the request message, where the response message includes at least one of the following: a computing power state of the network device, a storage state of the network device, energy consumption information of the network device, or a network energy consumption target value of the network device. In this manner, the first network management device may determine the requirement for training and the like based on the state information. In this way, availability of the trained model can be ensured.

In some implementations, the method may further include: sending a second model training report to a first network management device, where the second model training report includes training data used to train the second part and structure information of the second part. In this manner, the training data used to train the second part may be further provided for a server, so that the server obtains the matched second part through training.

For example, the method may be performed by the first network management device, for example, a network management system (network management system, NMS).

In some implementations, obtaining the training data used to train the first part of the two-side model includes: receiving a second training request from a server, where the second training request indicates to train the first part of the two-side model, and the second training request includes the training data used to train the first part of the two-side model and structure information of the first part. In this manner, the model training can be performed based on the second training request from the server by using the training data and the structure information that are provided by the server, so that the first part matching the second part can be obtained.

In some implementations, the method may further include: sending a fourth model training report to the server, where the fourth model training report includes at least one of the following: a model identifier of the two-side model, a model identifier of the first part, or actual performance of the first part. In this manner, the fourth model training report is sent to the server, so that the server can determine that the training of the first part has been completed, and the server can further determine to deploy the model.

In some implementations, the method may further include: receiving a notification message from the server, where the notification message indicates that the second part obtained by the server through training has been loaded to the terminal device; and sending the first part to the network device in response to the notification message. In this manner, after the second part is deployed on the terminal device, the first part may be loaded to the network device based on the notification message from the server. This can ensure that the network device uses the first part as a part of the two-side model, rather than as a one-side model.

In some implementations, the second training request further includes at least one of the following: the model identifier of the two-side model, the model identifier of the first part, a model identifier of the second part, a first identifier of the network device, a second identifier of the terminal device, indication information indicating a type of inference task using the two-side model, or a performance requirement for the two-side model.

In some implementations, the method may further include: sending a request message to a second network management device, where the request message includes the first identifier of the network device; receiving a response message from the second network management device, where the response message includes at least one of the following: a computing power state of the network device, a storage state of the network device, energy consumption information of the network device, or a network energy consumption target value of the network device; and determining, based on the response message, at least one of the following: an energy consumption requirement for training the two-side model, a first energy consumption requirement for the inference task using the first part, a second energy consumption requirement for the inference task using the second part, the first model size requirement for the first part, or a second model size requirement for the second part. In this manner, the first network management device may determine the requirement for training and the like based on the state information. In this way, availability of the trained model can be ensured.

In some implementations, the method may further include: sending a second model training report to a server, where the second model training report includes training data used to train the second part and structure information of the second part. In this manner, the training data used to train the second part may be further provided for the server, so that the server obtains the matched second part through training.

In some implementations, the second model training report further includes at least one of the following: a model identifier of the two-side model, a model identifier of the first part, a first identifier of the network device, actual performance of the first part, actual training energy consumption of the first part, estimated energy consumption of the inference task using the first part, an actual model size of the first part, a performance requirement for the second part, a second energy consumption requirement for the inference task using the second part, or a second model size requirement for the second part.

According to a second aspect of the present disclosure, a model training method is provided. The method includes: sending a first training request to a second network management device, where the first training request indicates to train a first part of a two-side model, and the two-side model includes the first part to be deployed on a network device and a second part to be deployed on a terminal device; and receiving a model training report from the second network management device, where the model training report at least includes a model identifier of the first part.

The method may be performed by a first network management device. In this manner, the first network management device may instruct the second network management device to train at least the first part of the two-side model, to support use of the two-side model of an air interface.

In some implementations, the first training request includes training data used to train the first part and structure information of the first part. In this manner, the second network management device may perform training based on the training data and the structure information, to ensure that the obtained first part matches and is associated with the trained second part.

In some implementations, the model training report includes a first model training report, and the first model training report includes at least one of the following: a model identifier of the two-side model, the model identifier of the first part, actual performance of the first part, actual training energy consumption of the first part, estimated energy consumption of an inference task using the first part, or an actual model size of the first part.

In some implementations, the method may further include: receiving a second training request from a server, where the second training request indicates to train the first part of the two-side model, and the second training request includes the training data used to train the first part and the structure information of the first part. In this manner, it may be determined that the second part has been trained by the server, and the second network management device may be indicated to train the second part.

In some implementations, the model training report includes a second model training report, and the second model training report includes training data used to train the second part and structure information of the second part. In some implementations, the method may further include: sending a training request to the server, where the training request includes the training data used to train the second part and the structure information of the second part. In this manner, the server may perform training to obtain the second part. In addition, because the training data and the structure information that are used to train the second part are from the second network management device, the second part obtained by the server through training matches the first part obtained by the second network management device through training.

In some implementations, the second model training report further includes at least one of the following: a model identifier of the two-side model, the model identifier of the first part, a first identifier of the network device, actual performance of the first part, actual training energy consumption of the first part, estimated energy consumption of an inference task using the first part, or an actual model size of the first part. In this manner, the first network management device can learn of a case in the training process of the first part.

In some implementations, the method may further include: forwarding the second model training report to the server; receiving a notification message from the server, where the notification message indicates that the second part has been loaded to the terminal device; and sending a model loading request to the second network management device, where the model loading request indicates to load the first part to the network device. In this manner, after the server deploys the second part in the terminal device, the second network management device may be indicated, based on the model loading request from the server, to deploy the first part in the network device. In this way, an association between the first part and the second part can be ensured, and use of the two-side model can be ensured.

In some implementations, the method further includes: receiving a second training request from the server, where the second training request is used to request to train the first part of the two-side model, and further requests the training data used to train the second part; and sending the first training request to the second network management device, where the first training request is used to request to train the first part of the two-side model, and further requests the training data used to train the second part. For example, the method further includes: receiving the first model training report from the second network management device, where the first model training report includes the training data used to train the second part and the structure information of the second part, and the first model training report indicates that the training of the first part has been completed. For example, the method further includes: sending the second model training report to the server, where the second model training report includes the training data used to train the second part and the structure information of the second part, and the second model training report indicates that the training of the first part has been completed. In this manner, the server may obtain the second part through training based on the second model training report, and use of the two-side model of the air interface can be supported.

According to a third aspect of the present disclosure, a model training method is provided. The method includes: obtaining training data used to train a second part of a two-side model, where the two-side model includes a first part to be deployed on a network device and the second part to be deployed on a terminal device; performing model training based on the training data to obtain the second part; and sending the second part to the terminal device.

The method may be performed by a server. In this manner, the server may assist in a training process of the two-side model of an air interface. Specifically, the second part is trained and deployed on the terminal device, to support use of the two-side model of the air interface.

In some implementations, the method may further include: sending a second training request to a first network management device, where the second training request indicates to train the first part of the two-side model, and the second training request includes training data used to train the first part of the two-side model and structure information of the first part. In this manner, the training data and the structure information that are used for the first part may be provided, so that the first part matching the second part can be obtained by a management domain through training.

In some implementations, the method may further include: receiving a first model training report from the first network management device, where the first model training report indicates that the first part has been obtained through training. In this way, the server may determine, based on the first model training report, that training of the first part has been completed by the management domain.

In some implementations, obtaining the training data used to train the second part of the two-side model includes: receiving a second model training report from a first network management device, where the second model training report includes the training data used to train the second part and structure information of the second part. In this manner, the training data and the structure information that are provided by the management domain and that are used for the second part may be obtained, so that the second part obtained through training can match the first part obtained by the management domain through training.

In some implementations, the second model training report further includes at least one of the following: a model identifier of the two-side model, a model identifier of the first part, a first identifier of the network device, actual performance of the first part, a performance requirement for the second part, a second energy consumption requirement for an inference task using the second part, or a second model size requirement for the second part.

In some implementations, the method may further include: sending a notification message to the first network management device, where the notification message indicates that the second part has been loaded to the terminal device. In this way, the management domain may further deploy the first part in the network device based on the notification message, thereby ensuring use of the two-side model.

According to a fourth aspect of the present disclosure, a system is provided. The system includes a first network management device and a second network management device. The first network management device may be configured to perform an operation of the method according to the second aspect or any implementation. The second network management device may be configured to perform an operation of the method that can be performed by the second network management device according to the first aspect or any implementation.

In some implementations, the system may further include a server. The server may be configured to perform an operation of the method according to the third aspect or any implementation. For example, the server may obtain a second part of a two-side model through training.

In some implementations, the system may further include a network device. The network device is configured to: receive the first part, of the two-side model, obtained by the second network management device through training. In some implementations, the network device is further configured to: receive the second part from the server; and send the second part to a terminal device. In some implementations, the system may further include the terminal device, configured to receive the second part from the network device.

In some other implementations, the second network management device may be further configured to obtain the second part of the two-side model through training.

It should be noted that some implementations and beneficial effect of the first aspect to the third aspect are also applicable to the fourth aspect. For brevity, details are not described herein again.

According to a fifth aspect of the present disclosure, a system is provided. The system includes a first network management device and a server. The first network management device may be configured to perform an operation of the method that can be performed by the first network management device according to the first aspect or any implementation. The server may be configured to perform an operation of the method according to the third aspect or any implementation. For example, the server may obtain a second part of a two-side model through training.

In some implementations, the system may further include a network device. The network device is configured to: receive a first part, of the two-side model, obtained by the first network management device through training. In some implementations, the network device is further configured to: receive the second part from the server; and send the second part to a terminal device. In some implementations, the system may further include the terminal device, configured to receive the second part from the network device.

In some other implementations, the first network management device may be further configured to obtain the second part of the two-side model through training.

It should be noted that some implementations and beneficial effect of the first aspect to the third aspect are also applicable to the fifth aspect. For brevity, details are not described herein again.

According to a sixth aspect of the present disclosure, a method is provided. The method may include: A first network management device performs an operation of the method according to the second aspect or any implementation, and a second network management device performs an operation of the method that can be performed by the second network management device according to the first aspect or any implementation.

In some implementations, the method further includes: A server performs an operation of the method according to the third aspect or any implementation. For example, the server may obtain a second part of a two-side model through training.

In some implementations, the method further includes: A network device receives the second part from the server; and sends the second part to a terminal device. In some implementations, the method further includes: The terminal device receives the second part from the network device.

In some other implementations, the method further includes: The second network management device obtains the second part of the two-side model through training.

According to a seventh aspect of the present disclosure, a method is provided. The method includes: A first network management device performs an operation of the method that can be performed by the first network management device according to the first aspect or any implementation.

In some implementations, the method further includes: A server performs an operation of the method according to the third aspect or any implementation. For example, the server may obtain a second part of a two-side model through training.

In some implementations, the method further includes: A network device receives the second part from the server; and sends the second part to a terminal device. In some implementations, the method further includes: The terminal device receives the second part from the network device.

In some other implementations, the method further includes: The first network management device obtains the second part of the two-side model through training.

According to an eighth aspect of the present disclosure, a network management device is provided. The network management device includes a component configured to perform an operation of the method according to any one of the first aspect or the implementations of the first aspect, or includes a component configured to perform an operation of the method according to any one of the second aspect or the implementations of the second aspect. Optionally, the component may be implemented as a unit, a module, or the like.

According to a ninth aspect of the present disclosure, a server is provided. The server includes a component configured to perform an operation of the method according to any one of the third aspect or the implementations of the third aspect. Optionally, the component may be implemented as a unit, a module, or the like.

According to a tenth aspect of the present disclosure, a network management device is provided. The network management device includes a transceiver, a processor, and a memory. The memory stores instructions executed by the processor; and when the instructions are executed by the processor, the network management device is enabled to perform an operation of the method according to any one of the first aspect or the second aspect or the implementations of the first aspect or the second aspect.

According to an eleventh aspect of the present disclosure, a server is provided. The server includes a transceiver, a processor, and a memory. The memory stores instructions executed by the processor; and when the instructions are executed by the processor, the server is enabled to perform an operation of the method according to any one of the third aspect or the implementations of the third aspect.

According to a twelfth aspect of the present disclosure, a computer-readable storage medium, for example, a non-transitory computer-readable storage medium, is provided. The computer-readable storage medium stores a computer program; and when the computer program is executed by a processor, an operation of the method according to any one of the first aspect to the third aspect or the implementations of the first aspect to the third aspect is implemented.

According to a thirteenth aspect of the present disclosure, a chip or a chip system is provided. The chip or the chip system includes a processing circuit, configured to perform an operation of the method according to any one of the first aspect to the third aspect or the implementations of the first aspect to the third aspect.

According to a fourteenth aspect of the present disclosure, a computer program or a computer program product is provided. The computer program or the computer program product is tangibly stored on a computer-readable medium and includes computer-executable instructions. When the computer-executable instructions are executed, a device is enabled to implement an operation of the method according to any one of the first aspect to the third aspect or the implementations of the first aspect to the third aspect.

It should be noted that some embodiments and beneficial effect of the foregoing method aspects are also applicable to an apparatus aspect, a user equipment aspect, a network device aspect, a computer-readable storage medium aspect, a chip or chip system aspect, or a computer program or computer program product aspect. For brevity, details are not described herein again.

### BRIEF DESCRIPTION OF DRAWINGS

With reference to the accompanying drawings and the following detailed descriptions, the foregoing and other features, advantages, and aspects of embodiments of the present disclosure become more apparent. In the accompanying drawings, same or similar reference numerals indicate same or similar elements.
FIG. 1 is a diagram of a two-side AI model for channel state information (channel state information, CSI) feedback;
FIG. 2 is a diagram of a structure of a network system to which some embodiments of the present disclosure can be applied;
FIG. 3 is a diagram of a structure of another network system to which some embodiments of the present disclosure can be applied;
FIG. 4 is a signaling diagram according to some embodiments of the present disclosure;
FIG. 5 is another signaling diagram according to some embodiments of the present disclosure;
FIG. 6 is yet another signaling diagram according to some embodiments of the present disclosure;
FIG. 7 is still another signaling diagram according to some embodiments of the present disclosure;
FIG. 8 is a further signaling diagram according to some embodiments of the present disclosure;
FIG. 9 is yet a further signaling diagram according to some embodiments of the present disclosure;
FIG. 10A to FIG. 10C are diagrams of training and inference scenarios according to some embodiments of the present disclosure;
FIG. 11 is a block diagram of a network management device according to some embodiments of the present disclosure;
FIG. 12 is a block diagram of a network management device according to some embodiments of the present disclosure;
FIG. 13 is a block diagram of a server according to some embodiments of the present disclosure; and
FIG. 14 is a block diagram of an example device that may be used to implement an embodiment of the present disclosure.

### DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "include" and similar terms thereof should be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to cellular communication protocols such as 3rd generation (3rd Generation, 3G), 4th generation (4G), 5th generation (5G), and 6th generation (6G), wireless local area network communication protocols such as the institute of electrical and electronics engineers (Institute of Electrical and Electronics Engineers, IEEE) 802.11, and/or any other protocols currently known or developed in the future.

Technical solutions in embodiments of the present disclosure are applied to a communication system that complies with any appropriate communication protocol, for example, a universal mobile telecommunications service (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system or a new radio (New Radio, NR) system, or a future evolved 6G or 7G communication system.

It should be understood that embodiments of the present disclosure may be applied to any communication system that has a similar problem, for example, a wireless local area network (WLAN), a wired communication system, or another communication system developed in the future.

The term "terminal device" used in the present disclosure is any terminal device that can perform wired or wireless communication with a network device or between terminal devices. The terminal device sometimes may be referred to as user equipment (User Equipment, UE). The terminal device may be any type of mobile terminal, fixed terminal, or portable terminal. In an example, the terminal device may include a mobile phone, a station, a unit, a device, a mobile terminal (Mobile Terminal, MT), a subscriber station, a portable subscriber station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, a flight vehicle, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device that can be used for communication, or any combination thereof. This is not limited in embodiments of the present disclosure.

The term "network device" used in the present disclosure is an entity or a node that may be configured to communicate with the terminal device, for example, may be an access network device (namely, an access network device). The access network device may be an apparatus that is deployed in a RAN and that provides a wireless communication function for the mobile terminal, for example, may be a RAN network device. The access network device may include various types of base stations (base stations, BS). For example, the access network device may include various forms of macro base stations, micro base stations, picocell base stations, femto base stations, relay stations, access points, satellites, remote radio units (Remote Radio Units, RRU), radio heads (Radio Heads, RH), remote radio heads (Remote Radio Heads, RRH), or the like, or may be a device that undertakes a base station function in device-to-device (D2D) communication or machine-to-machine (M2M) communication. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a heavy-traffic area, and the CU is deployed in a central equipment room. Alternatively, the CU and the DU may be deployed in a same equipment room. Alternatively, the CU and the DU may be different components in a same rack. Alternatively, the access network device may be an apparatus that is deployed in an open RAN (Open RAN, O-RAN) and that provides a wireless communication function for the mobile terminal. For example, the access network device may include an open CU (Open-CU, O-CU) and/or an open DU (Open-DU, O-DU). For ease of description, in subsequent embodiments of the present disclosure, the foregoing apparatuses that provide a wireless communication function for the mobile terminal are collectively referred to as a network device. This is not specifically limited in embodiments of the present disclosure.

As described above, an AI model (namely, a RAN domain AI model) used by an air interface may include a one-side AI model (a one-side model for short) and a two-side AI model (a two-side model for short). For example, the one-side AI model may be used for beam management, positioning, or the like. For example, the two-side AI model may be used for CSI feedback or the like. For the two-side AI model, characteristics of the model may include as follows: The model includes two parts, and a model output of the first part is used as a model input of the second part. Model training needs to be collaboratively performed, so that an original input and a final output are as close as possible. Model inference needs to be collaboratively performed, and models used by two parties for inference need to match.

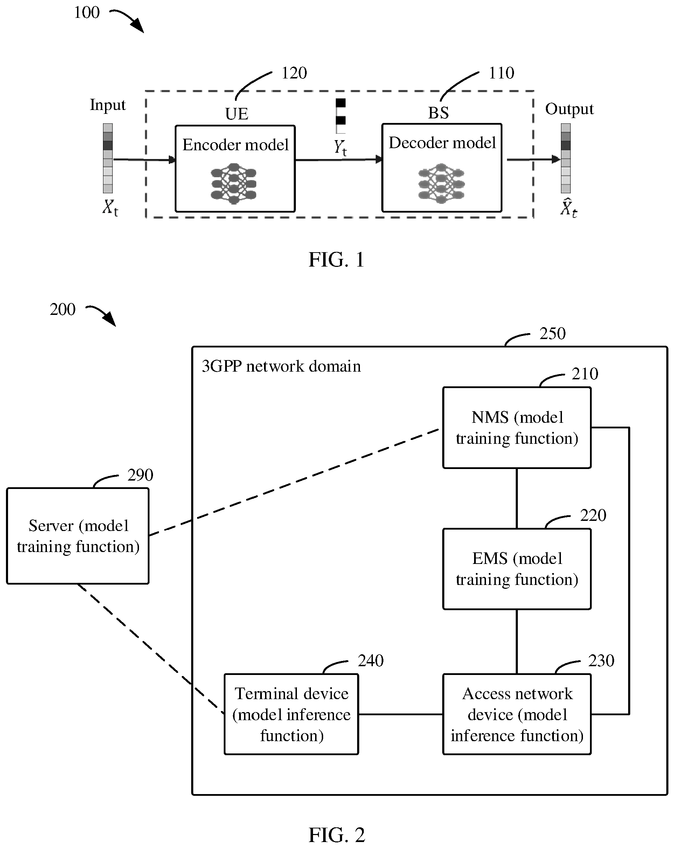

CSI feedback is used as an example. FIG. 1 is a diagram of a two-side AI model 100 used for CSI feedback. In FIG. 1, a decoder model deployed on an access network device (for example, a BS) 110 and an encoder model deployed on a terminal device (for example, UE) 120 are shown. In a frequency division multiplexing network, the BS needs to obtain downlink CSI feedback to perform pre-encoding to achieve a performance gain. However, transmitting original CSI by the UE consumes a large quantity of air interface resources. Therefore, to reduce CSI feedback overheads, the two-side AI model may be used to implement a CSI compression and reconstruction mechanism. Specifically, the two-side AI model may be constructed by using a neural network structure of an autoencoder (AutoEncoder), and the two-side AI model includes an encoder model and a decoder model. The encoder model is deployed on a UE side, and is configured to perform dimension reduction processing on an original CSI matrix (represented as *Xₜ*) through a neural network, to obtain compressed CSI (represented as *Yₜ*); and the decoder model is deployed on a BS side, and is configured to restore the received compressed CSI through the neural network, to obtain estimated original CSI (represented as *X̂ₜ*).

Model life cycle management involves model training, model testing, model simulation, model loading, model inference, and the like. The model life cycle management may be performed by a management domain, and specifically the model training and the model inference may be performed by the management domain, a RAN domain, and/or a core network domain. For a two-side AI model for RAN domain inference, the management domain may assist in model training, and then the model is deployed on the access network device and the terminal device to perform model inference. However, details about how the management domain specifically assists in two-side AI model training in the RAN domain still need to be further studied.

FIG. 2 is a diagram of a structure of a network system 200 to which some embodiments of the present disclosure can be applied. FIG. 2 includes a 3GPP network domain 250 and a server 290 outside the 3GPP network domain 250. The 3GPP network domain 250 includes an NMS 210, an EMS 220, an access network device 230, and a terminal device 240. The NMS 210 and/or the EMS 220 perform/performs a model training function, and the access network device 230 and the terminal device 240 perform a model inference function. The server 290 may be a UE server, and may be a server provided by a vendor of the terminal device 240, or may be a server provided by a vendor of a chip in the terminal device 240. For example, the server 290 may perform the model training function, and may provide a software download or upgrade service or the like for the terminal device 240.

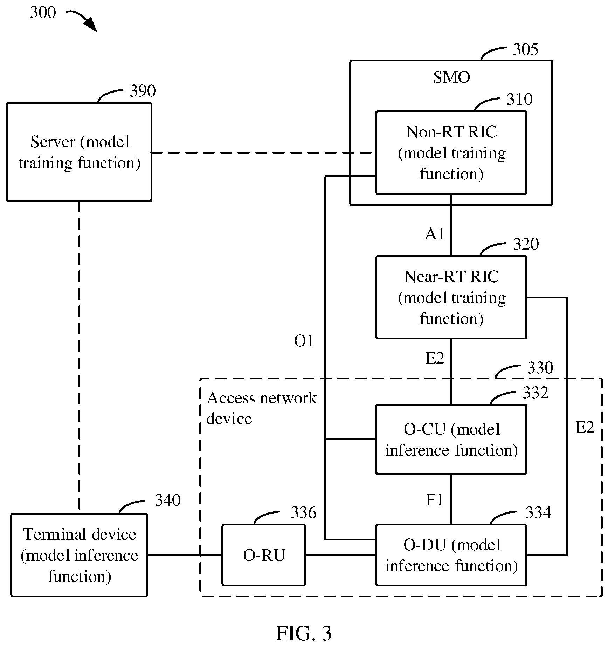

FIG. 3 is a diagram of a structure of a network system 300 to which some embodiments of the present disclosure can be applied. The system 300 is based on an O-RAN architecture, and an O-RAN aims to implement an intelligent and open access network. The O-RAN is a concept proposed based on RAN interoperability and standardization, and provides a same interconnection standard for white-box hardware and software of different vendors. As shown in FIG. 3, the system 300 includes a service management and orchestration framework (service management and orchestration framework, SMO) 305, and includes a non-real time RAN intelligent controller (non-real time RAN intelligent controller, non-RT RIC or NRT RIC) 310. The system 300 further includes a near-real time RAN intelligent controller (near-real time RAN intelligent controller, near-RT RIC or nRT RIC) 320, an access network device 330, a terminal device 340, and a server 390. The access network device 330 includes an O-CU 332, an O-DU 334, and an O-RU 336. The non-RT RIC 310 and/or the near-RT RIC 320 perform/performs the model training function, and the O-CU 332, the O-DU 334, and the terminal device 340 perform the model inference function. The server 390 may be a UE server, and may be a server provided by a vendor of the terminal device 340, or may be a server provided by a vendor of a chip in the terminal device 340. For example, the server 390 may perform the model training function, and may provide a software download or upgrade service or the like for the terminal device 340.

Embodiments of the present disclosure relate to model training, of the two-side AI model, performed by the management domain, and the management domain may include the NMS 210 and the EMS 220 shown in FIG. 2, or the management domain may include the non-RT RIC 310 and the near-RT RIC 320 shown in FIG. 3. It may be understood that the management domain that performs model training may also be referred to as a management plane, and may include other devices, network elements, systems, or the like in other scenarios or architectures, which are not enumerated in the present disclosure again.

In the following detailed embodiments, for ease of description, descriptions are provided with reference to the system 200 shown in FIG. 2. However, it should be understood that the following embodiments may alternatively be applied to the system 300 shown in FIG. 3. For example, in the following, the NMS 210 may be replaced with the non-RT RIC 310, the EMS 220 may be replaced with the near-RT RIC 320, the access network device 230 may be replaced with the access network device 330 (or replaced with the O-CU 332 and the O-DU 334), the terminal device 240 may be replaced with the terminal device 250, and the server 290 may be replaced with the server 390. Therefore, the following embodiments may be applied to the system 300. In addition, the following example embodiments may alternatively be applied to other systems or architectures that are not shown in this specification, which are not enumerated herein again.

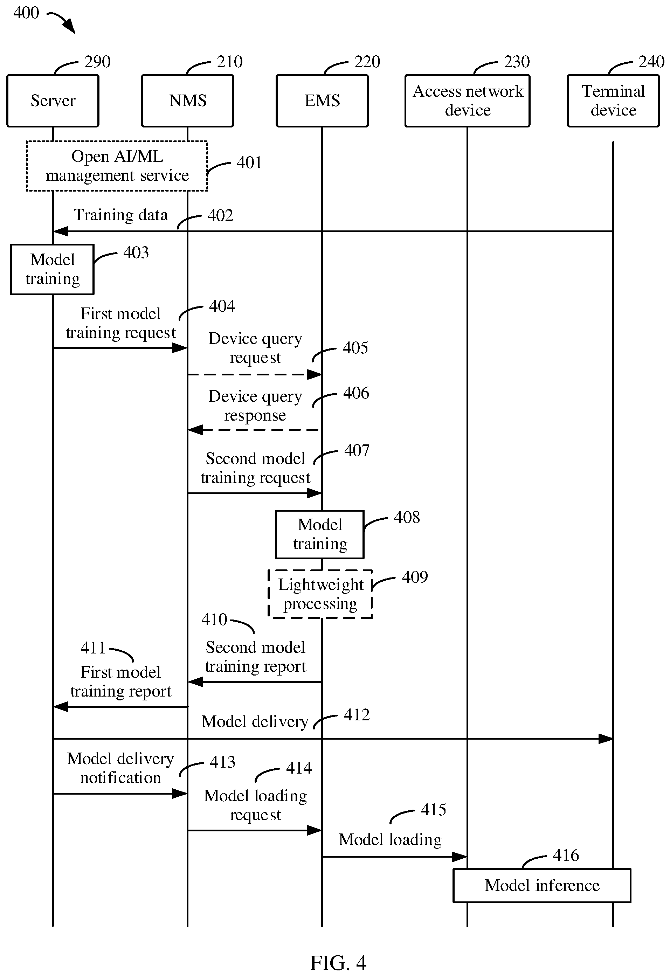

In embodiments of the present disclosure, the two-side AI model may include a first part deployed on the access network device and a second part deployed on the terminal device, and the first part matches (or is associated with) the second part. For example, that the first part matches the second part may be understood as follows: When an output of the second part is used as an input of the first part, an output of the first part may be similar to an input of the second part. For ease of description, in the following embodiments, it is assumed that the first part is a decoder model, and the second part is an encoder model. The following describes in detail with reference to FIG. 4 to FIG. 10C.

FIG. 4 is a diagram of signaling exchange 400 according to some embodiments of the present disclosure. In FIG. 4, a server 290, an NMS 210, an EMS 220, an access network device 230, and a terminal device 240 are related. It may be understood that although the signaling exchange 400 is described with reference to FIG. 2, the process may alternatively be applied to another system. This is not limited in the present disclosure. In FIG. 4, the server 290 and the EMS 220 perform model training. Specifically, the server 290 obtains a part (referred to as an encoder model or a UE-side model) that is in a two-side AI model and that needs to be deployed on the terminal device 240, and the EMS 220 obtains a part (referred to as a decoder model or a BS-side model) that is in the two-side AI model and that needs to be deployed on the access network device 230.

In 401, the NMS 210 may open an AI/ML management service to the server 290, for example, through a management service open interface. For example, the AI/ML management service may include model training, model deployment notification, or the like. It may be understood that because the server 290 does not belong to a 3GPP network domain, and cannot directly invoke a service in a 3GPP network, the NMS 210 may provide a service for the server 290 in a network capability exposure manner. It should be noted that step 401 is a pre-step in this embodiment, and a specific implementation of the network capability exposure manner is not limited in the present disclosure. In this manner, interfaces for a model training service and a model loading service of the two-side AI model can be opened for the server 290 outside the 3GPP network domain, to ensure normal execution of the model training.

In 402, the server 290 obtains training data. Specifically, the terminal device 240 may perform operations such as data collection, measurement, and computation, to obtain the training data, and the terminal device 240 may report the training data to the server 290. For example, the terminal device 240 may provide the training data for the server 290 through a private interface, for example, according to the hyper text transport protocol (Hyper Text Transport Protocol, HTTP) communication protocol. Assuming that this embodiment is intended to train the two-side AI model used for CSI feedback, the training data may include original CSI obtained by the terminal device 240 through measurement.

In 403, the server 290 performs model training based on the training data to obtain the encoder model (namely, the UE-side model) and an initial decoder model. A model training process may involve a plurality of rounds of iteration. For details about the model training, refer to the conventional technology. This is not limited in the present disclosure.

In 404, the server 290 sends a first model training request to the NMS 210. The first model training request includes the training data used to train the decoder model (namely, the BS-side model) and structure information of the decoder model. The first model training request may further include one or more of the following: a model identifier of the two-side AI model, an identifier of the access network device 230, an identifier of a terminal device group, a model identifier of the encoder model (namely, the UE-side model), indication information of a type of inference task using the two-side AI model, a model performance requirement (for example, a performance requirement for the decoder model), a two-side model training indication, or the like.

For example, after completing the model training in 403, the server 290 may construct, based on the training data obtained in 402 and optionally the initial decoder model obtained through model training, the training data used to train the decoder model (namely, the BS-side model) by a management domain. For example, the first model training request may directly include the training data used to train the decoder model (namely, the BS-side model). For example, the server 290 may store the training data used to train the decoder model (namely, the BS-side model), and the first model training request may include a stored address, to indicate the training data used to train the decoder model (namely, the BS-side model). Then, the management domain (for example, the NMS 210 or the EMS 220) may obtain, based on the storage address, the training data used to train the decoder model (namely, the BS-side model). For example, the management domain (for example, the NMS 210 or the EMS 220) may download, from the storage address according to the file transfer protocol (File Transfer Protocol, FTP), the training data used to train the decoder model (namely, the BS-side model).

The first model training request includes the structure information of the decoder model. By indicating the structure information, it can be ensured that the decoder model obtained by the management domain (for example, the NMS 210 or the EMS 220) through training matches (or interconnects) the encoder model obtained by the server 290 through training, thereby ensuring usability of the two-side AI model. For example, the structure information of the decoder model may include one or more of the following: a network type of the decoder model, a quantity of network layers, a quantity of nodes at an input layer, a quantity of nodes at an output layer, or the like. The network type may be a convolutional neural network, a fully connected neural network, a recurrent neural network, or the like. Optionally, the first model training request may include the initial decoder model to implicitly indicate the structure information of the decoder model. In this manner, the management domain (for example, the EMS 220) may perform training (for example, 408) based on the initial decoder model, reducing training computation amount and improving training efficiency.

The first model training request may further include the model identifier of the two-side AI model and/or the model identifier of the encoder model (namely, the UE-side model). In some examples, the model identifier of the encoder model (namely, the UE-side model) may uniquely represent or indicate the encoder model obtained by the server 290 through training. In some examples, the model identifier of the two-side AI model may be used to uniquely identify the two-side AI model. Optionally, the model identifier of the two-side AI model may be the same as the model identifier of the decoder model to be deployed on the access network device 230. For example, if a decoder model has been trained and assigned a model identifier, the model identifier of the decoder model can be used to refer to the two-side AI model and indicate retraining of the previously trained decoder model. Optionally, the model identifier of the two-side AI model may be a unique identifier generated by combining the model identifier of the encoder model and the model identifier of the decoder model.

The first model training request may further indicate the type of inference task using the two-side AI model. For example, the first model training request includes the indication information of the type of inference task using the two-side AI model. For example, the type of inference task, namely, an inference type, may indicate an actual use case for which the two-side AI model is to be used. For example, the inference type may be CSI feedback, beam management, or the like. Optionally, if the two-side AI model is trained for the first time or the model identifier of the two-side AI model is not allocated (unknown), the to-be-trained model may be indicated by using the inference type.

The first model training request may further include the identifier of the access network device 230 (namely, an identifier of a base station) and/or the identifier of the terminal device group (namely, an identifier of a UE group). The identifier of the access network device 230 (namely, the identifier of the base station) may indicate the access network device to which the decoder model can be applied. For example, the identifier of the base station may be implemented as a network unique identifier name (Distinguished Name, DN) or a geographical area indication. The identifier of the terminal device group (namely, the identifier of the UE group) may indicate the terminal device to which the encoder model obtained by the server 290 through training can be applied. For example, the terminal device group at least includes the terminal device 240 shown in the figure. For example, the identifier of the UE group may be implemented as a vendor name, a software version, a chip vendor name, a chip model, or the like of the UE.

The first model training request may further include the two-side model training indication, and the two-side model training indication may indicate that the two-side AI model needs to be trained. In some examples, the two-side model training indication may be represented as a Boolean value. For example, "true" represents that the two-side AI model needs to be trained, and "false" represents that the two-side AI model does not need to be trained (that is, a one-side AI model is trained). In some other examples, the two-side model training indication may be represented as an encoded value. For example, "1" represents that the two-side AI model needs to be trained, and "0" represents that the two-side AI model does not need to be trained (that is, the one-side AI model is trained). It may be understood that the two-side model training indication may be represented in another form. This is not limited in the present disclosure. In some embodiments, the two-side model training indication may be implicitly indicated. For example, if the first model training request includes the training data used to train the decoder model (namely, the BS-side model) and the structure information of the decoder model, the NMS 210 may know that the decoder model needs to be trained, but the NMS 210 may not know whether the decoder model to be trained is the one-side AI model or the BS-side model in the two-side AI model. Further, if the first model training request may further include the model identifier of the encoder model that has been obtained by the server 290 through training, the NMS 210 may determine that the to-be-trained decoder model needs to match the encoder model that has been obtained by the server 290 through training, so that the NMS 210 may determine that current training is performed for the two-side AI model. In other words, it may be considered that the first model training request implicitly indicates the two-side model training indication.

Optionally, the first model training request may further indicate the performance requirement for the decoder model. For example, the performance requirement may indicate an accuracy requirement when the decoder model is subsequently used for the inference task, for example, 90%, 85%, or another value.

Optionally, in step 405, the NMS 210 sends a device query request message to the EMS 220; and in step 406, the EMS 220 sends a device query response message to the NMS 210. For example, the device query request message may be used to request to query state information of the access network device. For example, the device query request message may be referred to as a device state query request message or the like. Correspondingly, the device query response message is used to provide the queried state information of the access network device. For example, the device query response message may be referred to as a device state query response message.

In some embodiments, the state information of the access network device may include one or more of the following: a computing power state, a storage state, an energy consumption state, and a network energy consumption target value of the access network device. For example, the device query response message may include a computing resource utilization rate, to indicate the computing power state. For example, the device query response message may include a storage resource utilization rate, to indicate the storage state. For example, the device query response message may include a current energy consumption or energy efficiency value, to indicate the energy consumption state. For example, the device query response message may include a target value of a network for energy consumption, to represent the network energy consumption target value. For example, the target value of the network for energy consumption is: overall energy consumption within a specific geographical range is less than 500 kilojoules (kJ).

In this manner, through 405 and 406, the NMS 210 may learn of the state information of the access network device, so that the NMS 210 can determine a requirement for training or the like based on the state information. For example, the requirement may be indicated to the EMS 220 in the following second model training request. In this way, availability of the first part (namely, the decoder model) of the trained two-side AI model in the access network device can be ensured, thereby supporting use of the two-side AI model.

In 407, the NMS 210 sends the second model training request to the EMS 220. The second model training request may include a part or all of the first model training request described above. The second model training request includes the training data used to train the decoder model (namely, the BS-side model) and the structure information of the decoder model. In this manner, the training data and the structure information that are used to train the decoder model can be provided for the EMS 220, so that the EMS 220 obtains the decoder model based on the training, thereby ensuring matching with the trained encoder model.

The first model training request may further include one or more of the following: the model identifier of the two-side AI model, the identifier of the access network device 230, the identifier of the terminal device group (including the terminal device 240), the model identifier of the encoder model (namely, the UE-side model) trained by the server 290, the indication information of the type of inference task using the two-side AI model, the model performance requirement, the two-side model training indication, or the like.

In some embodiments, the second model training request may further include one or more of the following about the decoder model: a training energy consumption requirement, an inference energy consumption requirement, a model size (size) requirement, a lightweight indication, or the like. Specifically, the NMS 210 may determine one or more of the following based on the device query response message received in 406: the training energy consumption requirement, the inference energy consumption requirement, the model size (size) requirement, the lightweight indication, or the like. For example, the computing power state and the storage state are used to determine a computation and storage requirement for two-side AI model training and inference with reference, and the energy consumption state and the network energy consumption target value are used to determine the energy consumption requirement for two-side AI model training and inference with reference. For example, the training (or inference) energy consumption requirement may include energy consumption (for example, duration and an energy amount) in the training (inference) process. For example, the model size requirement may represent a maximum requirement (or an upper limit) of storage space occupied by the trained model, for example, 100 MB. The lightweight indication indicates whether lightweight processing needs to be performed on the model, and a method for lightweight processing, for example, pruning, quantization, or distillation. Model pruning may also be referred to as model sparsity. For example, a part of weight parameters of the model may be directly deleted. Model quantization may compress the weight parameter of the model. Model distillation leverages knowledge distillation to compress the model.

In 408, the EMS 220 performs model training based on the second model training request. Specifically, the EMS 220 obtains the decoder model (namely, the BS-side model) through training by using the training data used to train the decoder model (namely, the BS-side model) and the structure information of the decoder model that are indicated by the second model training request.

Optionally, in 409, the EMS 220 performs lightweight processing on the decoder model. In some examples, if the second model training request includes the lightweight indication, indicating that the lightweight processing needs to be performed, the EMS 220 performs the lightweight processing. In some other examples, even if the second model training request does not include the lightweight indication, or the second model training request indicates that the lightweight processing does not need to be performed, the EMS 220 may autonomously determine to perform the lightweight processing. For example, the EMS 220 may determine to perform the lightweight processing based on the model performance requirement, the training energy consumption requirement, the inference energy consumption requirement, the model size requirement, or the like regarding the decoder model. For example, the EMS 220 may perform processing such as quantization or pruning on the decoder model, to obtain the decoder model obtained after the lightweight processing. It may be understood that the lightweight processing is to compress the model on a premise that the model performance requirement (for example, accuracy) is met, thereby reducing the computation amount and the size (for example, a quantity of parameters) of the model.

In this way, the EMS 220 may obtain, through 408 or through 408 and 409, the trained decoder model that matches the encoder model trained by the server 290. It should be noted that although 409 in FIG. 4 is shown as a step independent of 408, 408 may include 409 in some other embodiments, in other words, the lightweight processing may be performed in the model training process. It may be understood that because training in 408 and 409 is based on the training data and the structure information that are provided by the server for training the decoder model, the decoder model obtained through training can match the encoder model obtained by the server through training. Because each requirement in the second model training request is considered in 408 and 409, it is ensured that the decoder model obtained through training can adapt to the state information of the access network device, and availability of the decoder model is ensured.

In 410, the EMS 220 sends a second model training report to the NMS 210, to indicate that the decoder model has been trained. For example, the second model training report may include the model identifier of the trained decoder model and the identifier of the access network device 230. For example, the second model training report may further include one or more of the following: actual performance of the decoder model, actual training energy consumption of the decoder model, actual inference energy consumption of the decoder model, or an actual model size of the decoder model.

In 411, the NMS 210 sends a first model training report to the server 290, to indicate that the decoder model has been trained. For example, the first model training report may include a part or all of the second model training report. For example, the first model training report may include the model identifier of the trained decoder model and the actual performance of the decoder model.

In 412, the server 290 delivers the encoder model to the terminal device 240. In some examples, the encoder model may be expressed in a form of a model parameter or carried in a form of a model file. Specifically, the server 290 may send a model delivery request to the terminal device 240, and the model delivery request includes the encoder model, or includes the model parameter or a file address of the model file. For example, the model delivery request may further include a two-side model indication, the model identifier of the encoder model, and the model identifier of the decoder model. In this manner, the terminal device 240 may directly obtain the encoder model, or determine the encoder model by using the model parameter, or obtain the encoder model from the file address of the model file. The terminal device 240 may determine, based on the two-side model indication, that the encoder model is the UE-side model in the two-side AI model. In addition, the terminal device 240 may determine, based on the model identifier of the encoder model and the model identifier of the decoder model, a specific decoder model that matches the encoder model. In this manner, the terminal device 240 may use the encoder model from the server 290 as the UE-side model in the two-side AI model, instead of using the encoder model as the one-side model, so that an association with the decoder model in the access network device 230 can be ensured.

In 413, the server 290 sends a model delivery notification to the NMS 210, to indicate that the encoder model has been deployed on the terminal device 240. For example, the model delivery notification may include the two-side model indication and the model identifier of the encoder model, and indicates that the encoder model has been delivered.

In 414, the NMS 210 sends a model loading request to the EMS 220, and further in 415, the EMS 220 loads the decoder model to the access network device 230. For example, the model loading request may include the model identifier of the decoder model and the identifier of the access network device 230, and indicates the EMS 220 to deploy the decoder model in the access network device 230. For example, the model loading request may further include the two-side model indication, the model identifier of the encoder model, and the identifier of the terminal device group. In this manner, the access network device 230 may use the decoder model from the EMS 220 as the BS-side model in the two-side AI model, instead of using the decoder model as the one-side model, so that an association with the encoder model in the terminal device 240 can be ensured.

In some examples, the decoder model may be expressed in a form of a model parameter or carried in a form of a model file. For example, the EMS 220 may send another model loading request to the access network device 230, and the another model loading request may include the decoder model, or include the model parameter of the decoder model or a file address of the model file of the decoder model. In this manner, the access network device 230 may directly obtain the decoder model, or determine the decoder model by using the model parameter, or obtain the decoder model from the file address of the model file. For example, the another model loading request may further include a part or all of the foregoing model loading request. For example, the another model loading request includes the two-side model indication, the model identifier of the encoder model, and the identifier of the terminal device group. In this manner, the access network device 230 may determine, based on the two-side model indication, that the decoder model is the BS-side model in the two-side AI model. In addition, the access network device 230 may determine, based on the model identifier of the encoder model and the identifier of the terminal device group, a specific encoder model that matches the decoder model and a specific terminal device/specific terminal devices in which the encoder model is deployed. For example, the two-side model indication, the model identifier of the encoder model, and the identifier of the terminal device group may be understood as two-side model association information, to determine a specific encoder model that matches the decoder model and a specific terminal device/specific terminal devices in which the encoder model is deployed.

In this way, through 401 to 415, the server 290 can be supported in invoking a model management service, so that the server 290 and the EMS 220 collaborate to complete model training of the two-side AI model, and the two-side AI model is separately deployed on the terminal device 240 and the access network device 230. In some embodiments, in the training process, the state information of the access network device 230 may be considered, so that an appropriate model can be trained based on computing power, storage, and energy consumption requirements of the access network device 230.

Further, in step 416, the two-side AI model may be used in a subsequent model inference process. In an example, for a model inference process used for CSI feedback, refer to the foregoing descriptions with reference to FIG. 1.

With reference to the signaling exchange 400 described in FIG. 4, a service type (namely, a model training service or a model loading service) opened by a management plane (for example, the NMS 210) may be added, and the server 290 outside the 3GPP network domain 250 is supported in invoking the model training service and the model loading service of the management plane. The first/second model training request may include the two-side model indication, a model identifier of the UE-side model, a model structure of the BS-side model, and training data for the BS-side model, to support the management plane (for example, the EMS 220) in training the BS-side model by using the training data provided by the external server 290. The model loading request/the another model loading request may include the two-side model indication and/or the two-side model association information, to indicate that the UE-side model has been deployed, so that deployment and inference of the two-side AI model can be supported.

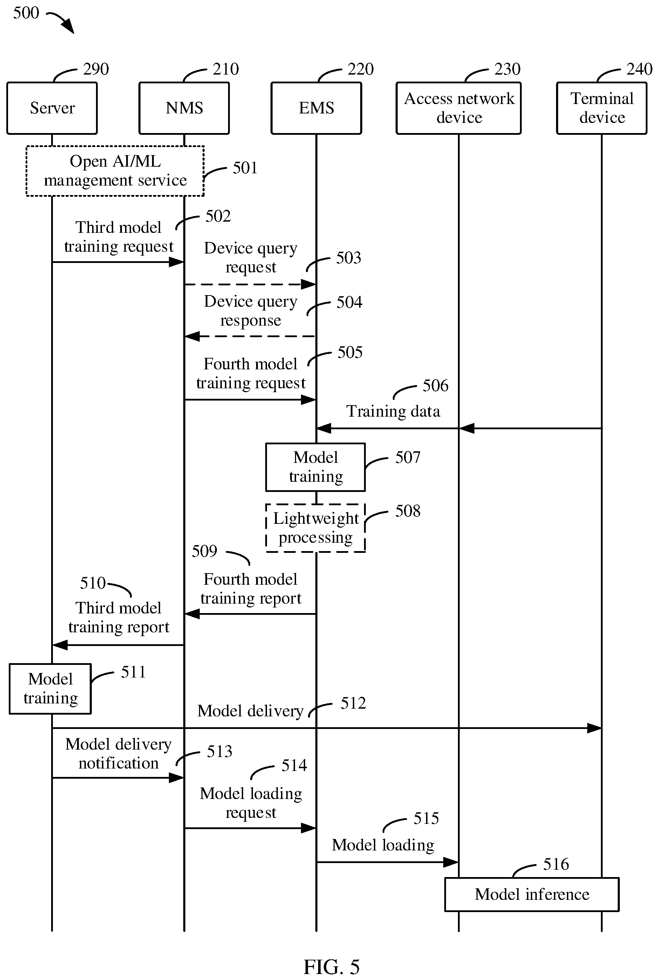

FIG. 5 is another diagram of signaling exchange 500 according to some embodiments of the present disclosure. In FIG. 5, a server 290, an NMS 210, an EMS 220, an access network device 230, and a terminal device 240 are related. It may be understood that although the signaling exchange 500 is described with reference to FIG. 2, the process may alternatively be applied to another system. This is not limited in the present disclosure. In FIG. 5, the server 290 and the EMS 220 perform model training. Specifically, the server 290 obtains a part (referred to as an encoder model or a UE-side model) that is in a two-side AI model and that needs to be deployed on the terminal device 240, and the EMS 220 obtains a part (referred to as a decoder model or a BS-side model) that is in the two-side AI model and that needs to be deployed on the access network device 230.

In 501, the NMS 210 may open an AI/ML management service to the server 290. This process is similar to 401 in FIG. 4. To avoid repetition, details are not described herein again.

In 502, the server 290 sends a third model training request to the NMS 210. The third model training request may include an indication of requesting training data used to train the UE-side model. The third model training request may further include one or more of the following: a model identifier of the two-side AI model, an identifier of the access network device 230, an identifier of a terminal device group (including the terminal device 240), indication information of a type of inference task using the two-side AI model, a model performance requirement (for example, a performance requirement for the decoder model), or a two-side model training indication.

In some examples, the indication used to request the training data used to train the UE-side model may be represented as a Boolean value. For example, "true" represents that the training data used to train the UE-side model is required, and "false" represents that the training data used to train the UE-side model is not required. In some other examples, the indication used to request the training data used to train the UE-side model may be represented as an encoded value. For example, "1" represents that the training data used to train the UE-side model is required, and "0" represents that the training data used to train the UE-side model is not required.

In some embodiments, the two-side model training indication and the indication used to request the training data used to train the UE-side model may be jointly indicated by using the Boolean value or the code. For example, "true" represents that the two-side AI model needs to be trained and the training data used to train the UE-side model is required. For example, "false" represents that the two-side AI model does not need to be trained. For example, the encoded value "00" represents that the two-side AI model does not need to be trained; "10" represents that only the BS-side model needs to be trained; and "11" represents that the two-side AI model needs to be trained, and the training data used to train the UE-side model is required.

For example, for the model identifier of the two-side AI model, the identifier of the access network device 230, the identifier of the terminal device group (including the terminal device 240), the indication information of the type of inference task using the two-side AI model, the model performance requirement, the two-side model training indication, or the like, refer to the terms described in the embodiment with reference to FIG. 4. Details are not described herein again.

Optionally, in step 503, the NMS 210 sends a device query request message to the EMS 220; and in step 504, the EMS 220 sends a device query response message to the NMS 210. For 503 and 504, refer to 405 and 406 described with reference to FIG. 4. Details are not described herein again.

In 505, the NMS 210 sends a fourth model training request to the EMS 220. The fourth model training request may include a part or all of the third model training request described above. The fourth model training request includes the indication of requesting the training data used to train the UE-side model. The fourth model training request may further include one or more of the following: the model identifier of the two-side AI model, the identifier of the access network device 230, the identifier of the terminal device group (including the terminal device 240), the indication information of the type of inference task using the two-side AI model, the model performance requirement, or the two-side model training indication.

In some embodiments, the fourth model training request may further include one or more of the following about the decoder model: a training energy consumption requirement, an inference energy consumption requirement, a model size requirement, a lightweight indication, or the like. The foregoing is described in detail with reference to the embodiment of the second model training request in FIG. 4.

In step 506, the EMS 220 obtains the training data. Specifically, the EMS 220 obtains, through the access network device 230, the training data collected by the terminal device 240. Specifically, the terminal device 240 may perform operations such as data collection, measurement, and computation to obtain the training data, and the terminal device 240 may send the training data to the access network device 230 through an uplink, so that the access network device 230 can provide the training data for the EMS 220 (for example, based on the indication or the request from the EMS 220). Assuming that this embodiment is intended to train the two-side AI model used for CSI feedback, the training data may include original CSI obtained by the terminal device 240 through measurement.

In step 507, the EMS 220 performs model training based on the fourth model training request by using the training data to obtain the decoder model (namely, the BS-side model) and an initial encoder model (namely, the UE-side model).

Optionally, in 508, the EMS 220 may perform lightweight processing on the decoder model. In some examples, if the fourth model training request includes the lightweight indication, indicating that the lightweight processing needs to be performed, the EMS 220 performs the lightweight processing. In some other examples, even if the fourth model training request does not include the lightweight indication, or the fourth model training request indicates that the lightweight processing does not need to be performed, the EMS 220 may autonomously determine to perform the lightweight processing, as described in the embodiment with reference to 409 in FIG. 4.

In this way, the EMS 220 may obtain the trained decoder model through 507 or through 507 and 508. It should be noted that although 508 in FIG. 5 is shown as a step independent of 507, 507 may include 508 in some other embodiments, in other words, the lightweight processing may be performed in the model training process.

In 509, the EMS 220 sends a fourth model training report to the NMS 210. For example, the fourth model training report may indicate that the decoder model has been trained, and the fourth model training report includes the training data used to train the encoder model (namely, the UE-side model) and structure information of the encoder model.

For example, after completing the model training in 507, the EMS 220 may construct, based on the training data obtained in 506 and optionally the initial encoder model obtained through model training, the training data used to train the encoder model (namely, the UE-side model) by the server 290. For example, the fourth model training report may directly include the training data used to train the encoder model (namely, the UE-side model). For example, the fourth model training report may include a storage address of the training data used to train the encoder model (namely, the UE-side model), so that the server 290 can download, from the storage address according to the FTP, the training data used to train the encoder model (namely, the UE-side model).

For example, the fourth model training report may include the model identifier of the trained decoder model and the identifier of the access network device 230. For example, the fourth model training report may further include one or more of the following: actual performance of the decoder model, actual training energy consumption of the decoder model, actual inference energy consumption of the decoder model, or an actual model size of the decoder model.

In step 510, the NMS 210 sends a third model training report to the server 290. For example, the third model training report may indicate that the decoder model has been trained, and the third model training report includes the training data used to train the encoder model (namely, the UE-side model) and the structure information of the encoder model. In this manner, the training data and the structure information that are used to train the encoder model can be provided for the server 290, so that the server 290 obtains the encoder model based on the training, thereby ensuring matching with the trained decoder model. For example, the third model training report may include a part or all of the fourth model training report. For example, the third model training report may include the model identifier of the trained decoder model, the identifier of the access network device 230, and the actual performance of the decoder model.

Optionally, the third model training report may further include the model performance requirement for the encoder model (namely, the UE-side model). For example, the model performance requirement for the encoder model indicates an accuracy requirement for the encoder model when the encoder model is subsequently used for the inference task, for example, 90%, 88%, or another value.

In 511, the server 290 performs model training based on the third model training report, to obtain the trained encoder model. Specifically, the server 290 may construct the model based on the structure information of the encoder model, and perform model training based on the training data used to train the encoder model (namely, the UE-side model). It may be understood that because training in 511 is based on the training data and the structure information that are provided by the EMS 220 for training the encoder model, the encoder model obtained through training can match the decoder model obtained by the EMS 220 through training. In some examples, in the training process in step 511, the model performance requirement about the encoder model in the third model training report may be further considered, to ensure that the encoder model obtained through training can adapt to state information of the terminal device, and ensure availability of the encoder model.

In 512, the server 290 delivers the encoder model to the terminal device 240. In 513, the server 290 sends a model delivery notification to the NMS 210, to indicate that the encoder model has been deployed on the terminal device 240. In 514, the NMS 210 sends a model loading request to the EMS 220, and further in 515, the EMS 220 loads the decoder model to the access network device 230. In step 516, the two-side AI model may be used in a subsequent model inference process. Specifically, for 512 to 516, respectively refer to 412 to 416 described with reference to FIG. 4. For brevity, details are not described herein again.

With reference to the signaling exchange 500 described in FIG. 5, the server 290 can be supported in invoking a model management service, so that the server 290 and the EMS 220 collaborate to complete model training of the two-side AI model, and the two-side AI model is separately deployed on the terminal device 240 and the access network device 230. In some embodiments, in the training process, the state information of the access network device 230 may be considered, so that an appropriate model can be trained based on computing power, storage, and energy consumption requirements of the access network device 230. A service type (namely, a model training service or a model loading service) opened by a management plane (for example, the NMS 210) may be added, and the server 290 outside the 3GPP network domain 250 is supported in invoking the model training service and the model loading service of the management plane. The third/fourth model training request may include the two-side model indication and the indication of requesting the training data used to train the UE-side model, and the third/fourth model training report includes the training data used to train the encoder model and the structure information of the encoder model, to support the server 290 outside the 3GPP network domain 250 in training the UE-side model by using the training data provided by the management plane. The model loading request/the another model loading request may include the two-side model indication and/or the two-side model association information, to indicate that the UE-side model has been deployed, so that deployment and inference of the two-side AI model can be supported.

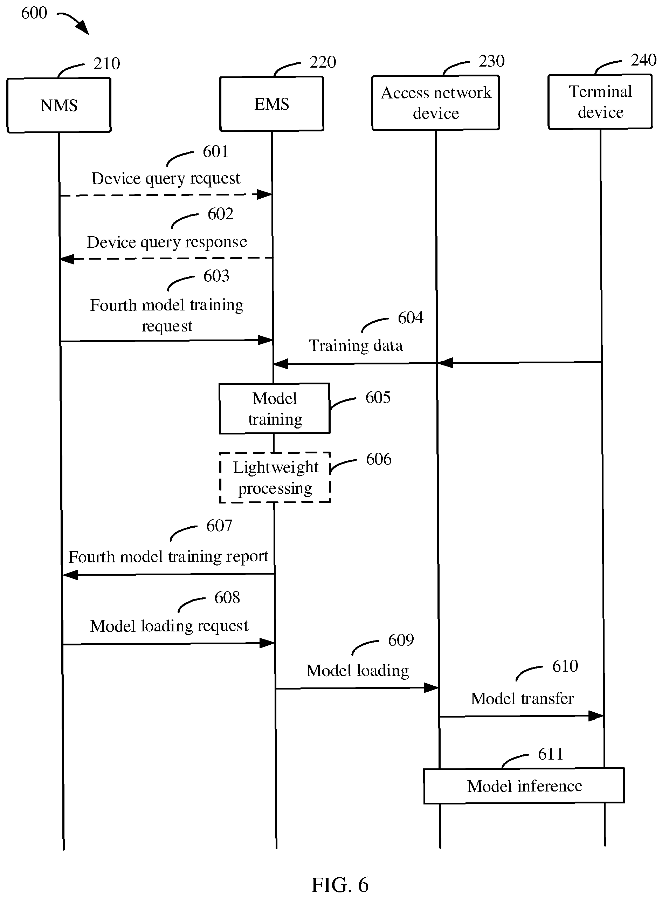

FIG. 6 is still another diagram of signaling exchange 600 according to some embodiments of the present disclosure. In FIG. 6, an NMS 210, an EMS 220, an access network device 230, and a terminal device 240 are related. It may be understood that although the signaling exchange 600 is described with reference to FIG. 2, the process may alternatively be applied to another system. This is not limited in the present disclosure. In FIG. 6, the EMS 220 performs model training, to obtain a part (referred to as an encoder model or a UE-side model) that is in the two-side AI model and that needs to be deployed on the terminal device 240 and a part (referred to as a decoder model or a BS-side model) that is in the two-side AI model and that needs to be deployed on the access network device 230.

Optionally, in step 601, the NMS 210 sends a device query request message to the EMS 220; and in step 602, the EMS 220 sends a device query response message to the NMS 210.

For example, the device query request message may be used to request to query state information of the access network device and request to query state information of a terminal device group. For example, the device query request message includes an identifier of the access network device 230 and an identifier of the terminal device group (for example, including the terminal device 240). Correspondingly, the device query response message is used to provide the queried state information of the access network device and the queried state information of the terminal device group. In some embodiments, the state information of the access network device may include one or more of the following: a computing power state, a storage state, an energy consumption state, and a network energy consumption target value of the access network device. In some embodiments, the state information of the terminal device group may include one or more of the following: a computing power state, a storage state, an energy consumption state, and a network energy consumption target value of each terminal device in the terminal device group.

In 603, the NMS 210 sends a fourth model training request to the EMS 220. The fourth model training request may further include one or more of the following: a model identifier of the two-side AI model, an identifier of the access network device 230, an identifier of the terminal device group (including the terminal device 240), indication information of a type of inference task using the two-side AI model, a model performance requirement (including a performance requirement for the decoder model and/or a performance requirement for the encoder model), or a two-side model training indication.

In some embodiments, the fourth model training request may further include one or more of the following about the decoder model and/or the encoder model: a training energy consumption requirement, an inference energy consumption requirement, a model size requirement, a lightweight indication, or the like. For example, the NMS 210 may determine one or more of the following based on the device query response message: the training energy consumption requirement, the inference energy consumption requirement, the model size requirement, the lightweight indication, or the like. For example, the NMS 210 may determine one or more of the following about the decoder model based on the state information of the access network device 230: a first training energy consumption requirement, a first inference energy consumption requirement, a first model size requirement, a first lightweight indication, or the like. For example, the NMS 210 may determine one or more of the following about the encoder model based on the state information of the terminal device 240: a second training energy consumption requirement, a second inference energy consumption requirement, a second model size requirement, a second lightweight indication, or the like.

Optionally, the fourth model training request may include an indication of requesting training data used to train the UE-side model. For example, the indication is "false", that is, the training data used to train the UE-side model is not required.

In step 604, the EMS 220 obtains the training data. This process is similar to the foregoing embodiment with reference to 506 in FIG. 5.

In 605, the EMS 220 performs model training based on the fourth model training request by using the training data to obtain the two-side AI model, where the two-side AI model includes the decoder model (namely, the BS-side model) and the encoder model (namely, the UE-side model). In this manner, the two parts of the two-side AI model may be obtained by the EMS 220 through training, so that a server is not introduced to participate in the training, and there is no need to additionally open a training-related interface or the like to the server, thereby reducing signaling exchange.

Optionally, in 606, the EMS 220 may perform lightweight processing on the two-side AI model. In some examples, if the fourth model training request includes the first lightweight indication and the second lightweight indication, indicating that the lightweight processing needs to be performed, the EMS 220 performs the lightweight processing on the two-side AI model (including the encoder model and the decoder model). In some other examples, even if the fourth model training request does not include any lightweight indication, or the fourth model training request indicates that the lightweight processing does not need to be performed, the EMS 220 may autonomously determine to perform the lightweight processing on the encoder model and/or the decoder model in the two-side AI model. The operation of the lightweight processing is similar to the foregoing process described with reference to 409 in FIG. 4.

In this way, the EMS 220 may obtain the trained two-side AI model through 605 or through 605 and 606, and the trained two-side AI model includes the trained encoder model and the trained decoder model. It should be noted that although 606 in FIG. 6 is shown as a step independent of 605, 605 may include 606 in some other embodiments, in other words, the lightweight processing may be performed in the model training process.

In 607, the EMS 220 sends a fourth model training report to the NMS 210. For example, the fourth model training report includes the two-side model indication, to indicate that the two-side AI model (including the encoder model and the decoder model) has been trained. For example, the fourth model training report may further include one or more of the following: a model identifier of the encoder model, the identifier of the terminal device group, a model identifier of the decoder model, the identifier of the access network device 230, actual performance of the two-side AI model, actual training energy consumption of the two-side AI model, actual inference energy consumption of the two-side AI model, an actual model size of the two-side AI model, or the like. For example, the actual performance of the two-side AI model includes actual performance of the encoder model and/or actual performance of the decoder model, the actual training energy consumption of the two-side AI model includes actual training energy consumption of the encoder model and/or actual training energy consumption of the decoder model, the actual inference energy consumption of the two-side AI model includes actual inference energy consumption of the encoder model and/or actual inference energy consumption of the decoder model, and the actual model size of the two-side AI model includes an actual model size of the encoder model and/or an actual model size of the decoder model.

In step 608, the NMS 210 sends a model loading request to the EMS 220, where the model loading request indicates the EMS 220 to deploy the two-side AI model. Specifically, the encoder model is deployed on the terminal device group (including the terminal device 240), and the decoder model is deployed on the access network device 230. For example, the model loading request includes the two-side model indication, the model identifier of the encoder model, the identifier of the terminal device group, the model identifier of the decoder model, and the identifier of the access network device 230.

In 609, the EMS 220 loads the two-side AI model to the access network device 230 based on the model loading request; and in 610, the access network device 230 transfers the encoder model to the terminal device 240.

For example, the EMS 220 may send another model loading request to the access network device 230, for deploying the encoder model in the terminal device 240 and deploying the decoder model in the access network device 230. In some examples, the decoder model and/or the encoder model may be expressed in a form of a model parameter or carried in a form of a model file. For example, the another model loading request includes the decoder model, or includes the model parameter of the decoder model or a file address of the model file of the decoder model. The another model loading request includes the encoder model, or includes the model parameter of the encoder model or a file address of the model file of the encoder model. For example, the another model loading request may further include the two-side model indication, the model identifier of the encoder model, the identifier of the terminal device group, the model identifier of the decoder model, and the identifier of the access network device 230.

For example, the access network device 230 may send the encoder model to each terminal device in the terminal device group, including the terminal device 240. In some examples, the access network device 230 may send one or more of the following to the terminal device 240: the encoder model, the two-side model indication, the model identifier of the encoder model, and the model identifier of the decoder model.

In step 611, the two-side AI model may be used in a subsequent model inference process.

With reference to the signaling exchange 600 described in FIG. 6, the EMS 220 can complete model training of the two-side AI model, and the two-side AI model is separately deployed on the terminal device 240 and the access network device 230. In some embodiments, in the training process, both the state information of the access network device and the state information of the terminal device may be considered, so that an appropriate model can be trained based on computing power, storage, and energy consumption requirements of the access network device and the terminal device. The fourth model training request and the fourth model training report may include the two-side model indication, and the model loading request/the another model loading request may include the two-side model indication and/or two-side model association information, so that deployment and inference of the two-side AI model can be supported.

In the foregoing embodiments with reference to FIG. 4 to FIG. 6, the EMS 220 on the management plane performs model training, for example, obtains the trained BS-side model (FIG. 4 or FIG. 5) or obtains the trained two-side AI model (FIG. 6). In the training process, the two-side training indication may be used to ensure matching between the BS-side model and the UE-side model, that is, the matching is used as the two-side AI model. During model deployment, the access network device and the terminal device may determine an association between the BS-side model and the UE-side model by using the two-side indication, to avoid considering the deployed model as a one-side model. In this manner, the matching and association between the BS-side model and the UE-side model in the model inference process can be ensured, thereby ensuring model inference performance.

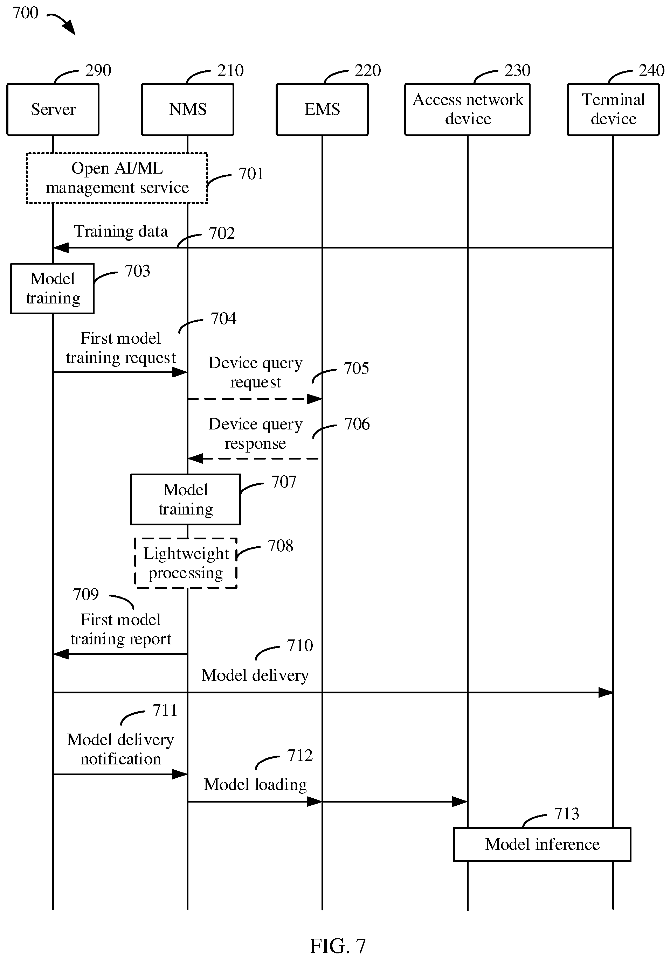

FIG. 7 is a diagram of signaling exchange 700 according to some embodiments of the present disclosure. In FIG. 7, a server 290, an NMS 210, an EMS 220, an access network device 230, and a terminal device 240 are related. It may be understood that although the signaling exchange 700 is described with reference to FIG. 2, the process may alternatively be applied to another system. This is not limited in the present disclosure. In FIG. 7, the server 290 and the NMS 210 perform model training. Specifically, the server 290 obtains a part (referred to as an encoder model or a UE-side model) that is in a two-side AI model and that needs to be deployed on the terminal device 240, and the NMS 210 obtains a part (referred to as a decoder model or a BS-side model) that is in the two-side AI model and that needs to be deployed on the access network device 230.

In 701, the NMS 210 may open an AI/ML management service to the server 290. In 702, the server 290 obtains training data. In 703, the server 290 performs model training based on the training data to obtain the encoder model (namely, the UE-side model) and an initial decoder model. In 704, the server 290 sends a first model training request to the NMS 210. Optionally, in step 705, the NMS 210 sends a device query request message to the EMS 220; and in step 706, the EMS 220 sends a device query response message to the NMS 210. Specifically, for 701 to 706, respectively refer to 401 to 406 described with reference to FIG. 4. For brevity, details are not described herein again.

In step 707, the NMS 210 performs model training based on the first model training request. Specifically, the NMS 210 obtains the decoder model (namely, the BS-side model) through training by using the training data used to train the decoder model (namely, the BS-side model) and structure information of the decoder model that are indicated by the first model training request.

Optionally, in 708, the NMS 210 performs lightweight processing on the decoder model. Specifically, the NMS 210 may determine one or more of the following about the decoder model based on the device query response message received in 706: a training energy consumption requirement, an inference energy consumption requirement, a model size requirement, or the like. For example, the NMS 210 may determine to perform the lightweight processing based on the model performance requirement, the training energy consumption requirement, the inference energy consumption requirement, the model size requirement, or the like. For example, the NMS 210 may perform processing such as quantization or pruning on the decoder model, to obtain the decoder model obtained after the lightweight processing. It may be understood that the lightweight processing is to compress the model on a premise that the model performance requirement (for example, accuracy) is met, thereby reducing the computation amount and the size (for example, a quantity of parameters) of the model.

In this way, the NMS 210 may obtain, through 707 or through 707 and 708, the trained decoder model that matches the encoder model trained by the server 290. It should be noted that although 708 in FIG. 7 is shown as a step independent of 707, 707 may include 708 in some other embodiments, in other words, the lightweight processing may be performed in the model training process.

In 709, the NMS 210 sends a first model training report to the server 290, to indicate that the decoder model has been trained. For example, the first model training report may include a model identifier of the trained decoder model and actual performance of the decoder model.

In 710, the server 290 delivers the encoder model to the terminal device 240. In 711, the server 290 sends a model delivery notification to the NMS 210, to indicate that the encoder model has been deployed on the terminal device 240. Specifically, for 710 and 711, respectively refer to 412 and 413 described with reference to FIG. 4. For brevity, details are not described herein again.

In 712, the NMS 210 loads the decoder model to the access network device 230. For example, the NMS 210 may send a model loading request to the access network device 230. For example, the NMS 210 may deploy the decoder model in the access network device 230 through the EMS 220. For example, the NMS 210 may send the model loading request to the EMS 220, and then the EMS 220 forwards the model loading request to the access network device 230. For example, the model loading request includes the decoder model, or includes a model parameter of the decoder model or a file address of a model file of the decoder model. For example, the model loading request may further include a two-side model indication, a model identifier of the encoder model, and an identifier of the terminal device group.

In step 713, the two-side AI model may be used in a subsequent model inference process.

With reference to the signaling exchange 700 described in FIG. 7, the server 290 can be supported in invoking a model management service, so that the server 290 and the NMS 210 collaborate to complete model training of the two-side AI model, and the two-side AI model is separately deployed on the terminal device 240 and the access network device 230. In some embodiments, in the training process, the state information of the access network device 230 may be considered, so that an appropriate model can be trained based on computing power, storage, and energy consumption requirements of the access network device 230. A service type (namely, a model training service or a model loading service) opened by a management plane (for example, the NMS 210) may be added, and the server 290 outside the 3GPP network domain 250 is supported in invoking the model training service and the model loading service of the management plane. The first model training request may include the two-side model indication, a model identifier of the UE-side model, a model structure of the BS-side model, and training data for the BS-side model, to support the management plane (for example, the NMS 210) in training the BS-side model by using the training data provided by the external server 290. The model loading request may include the two-side model indication and/or two-side model association information, to indicate that the UE-side model has been deployed, so that deployment and inference of the two-side AI model can be supported.

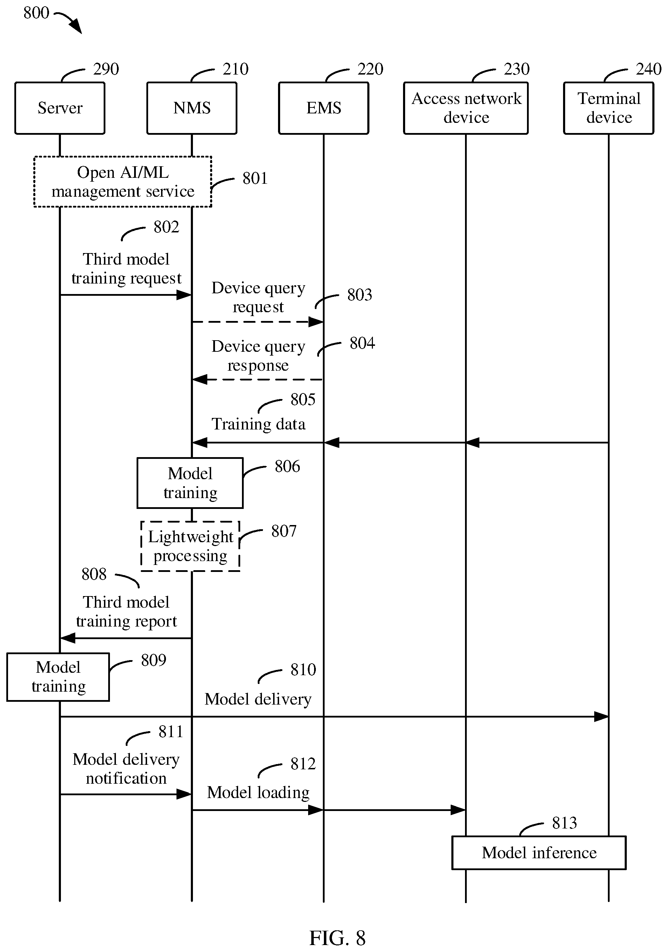

FIG. 8 is another diagram of signaling exchange 800 according to some embodiments of the present disclosure. In FIG. 8, a server 290, an NMS 210, an EMS 220, an access network device 230, and a terminal device 240 are related. It may be understood that although the signaling exchange 800 is described with reference to FIG. 2, the process may alternatively be applied to another system. This is not limited in the present disclosure. In FIG. 8, the server 290 and the NMS 210 perform model training. Specifically, the server 290 obtains a part (referred to as an encoder model or a UE-side model) that is in a two-side AI model and that needs to be deployed on the terminal device 240, and the NMS 210 obtains a part (referred to as a decoder model or a BS-side model) that is in the two-side AI model and that needs to be deployed on the access network device 230.

In 801, the NMS 210 may open an AI/ML management service to the server 290. In 802, the server 290 sends a third model training request to the NMS 210. Optionally, in step 803, the NMS 210 sends a device query request message to the EMS 220; and in step 804, the EMS 220 sends a device query response message to the NMS 210. Specifically, for 801 to 804, respectively refer to 501 to 504 described with reference to FIG. 5. For brevity, details are not described herein again.

In step 805, the NMS 210 obtains the training data. Specifically, the NMS 210 may obtain, through the EMS 220 and the access network device 230, the training data collected by the terminal device 240. Specifically, the terminal device 240 may perform operations such as data collection, measurement, and computation to obtain the training data, and the terminal device 240 may send the training data to the access network device 230 through an uplink, so that the access network device 230 can provide the training data for the EMS 220 (for example, based on the indication or the request from the EMS 220), and the NMS 210 can obtain the training data from the EMS 220. Assuming that this embodiment is intended to train the two-side AI model used for CSI feedback, the training data may include original CSI obtained by the terminal device 240 through measurement.

In step 806, the NMS 210 performs model training based on the third model training request by using the training data to obtain the decoder model (namely, the BS-side model) and an initial encoder model (namely, the UE-side model).

Optionally, in 807, the NMS 210 may perform lightweight processing on the decoder model. Specifically, the NMS 210 may determine one or more of the following about the decoder model based on the device query response message received in 804: a training energy consumption requirement, an inference energy consumption requirement, a model size requirement, or the like. For example, the NMS 210 may determine to perform the lightweight processing based on the model performance requirement, the training energy consumption requirement, the inference energy consumption requirement, the model size requirement, or the like. For example, the NMS 210 may perform processing such as quantization or pruning on the decoder model, to obtain the decoder model obtained after the lightweight processing. In this way, the NMS 210 may obtain the trained decoder model through 806 or through 806 and 807. It should be noted that although 807 in FIG. 8 is shown as a step independent of 806, 806 may include 807 in some other embodiments, in other words, the lightweight processing may be performed in the model training process.

In step 808, the NMS 210 sends a third model training report to the server 290. For example, the third model training report may indicate that the decoder model has been trained, and the third model training report includes the training data used to train the encoder model (namely, the UE-side model) and structure information of the encoder model.

For example, after completing the model training in 806, the NMS 210 may construct, based on the training data obtained in 805 and optionally the initial encoder model obtained through model training, the training data used to train the encoder model (namely, the UE-side model) by the server 290. For example, the third model training report may directly include the training data used to train the encoder model (namely, the UE-side model). For example, the third model training report may include a storage address of the training data used to train the encoder model (namely, the UE-side model), so that the server 290 can download, from the storage address according to the FTP, the training data used to train the encoder model (namely, the UE-side model).

For example, the third model training report may include the model identifier of the trained decoder model and the identifier of the access network device 230. For example, the third model training report may further include one or more of the following: actual performance of the decoder model, actual training energy consumption of the decoder model, actual inference energy consumption of the decoder model, or an actual model size of the decoder model.

In 809, the server 290 performs model training based on the third model training report, to obtain the trained encoder model. Specifically, the server 290 may construct the model based on the structure information of the encoder model, and perform model training based on the training data used to train the encoder model (namely, the UE-side model). It may be understood that because training in 809 is based on the training data and the structure information that are provided by the NMS 210 for training the encoder model, the encoder model obtained through training can match the decoder model obtained by the NMS 210 through training. In some examples, in the training process in step 809, the model performance requirement about the encoder model in the third model training report may be further considered, to ensure that the encoder model obtained through training can adapt to state information of the terminal device, and ensure availability of the encoder model.

In 810, the server 290 delivers the encoder model to the terminal device 240. In 811, the server 290 sends a model delivery notification to the NMS 210, to indicate that the encoder model has been deployed on the terminal device 240. In 812, the NMS 210 may deploy the decoder model in the access network device 230 through the EMS 220. In step 813, the two-side AI model may be used in a subsequent model inference process. Specifically, for 810 to 813, respectively refer to 710 to 713 described with reference to FIG. 7. For brevity, details are not described herein again.

With reference to the signaling exchange 800 described in FIG. 8, the server 290 can be supported in invoking a model management service, so that the server 290 and the NMS 210 collaborate to complete model training of the two-side AI model, and the two-side AI model is separately deployed on the terminal device 240 and the access network device 230. In some embodiments, in the training process, the state information of the access network device 230 may be considered, so that an appropriate model can be trained based on computing power, storage, and energy consumption requirements of the access network device 230. A service type (namely, a model training service or a model loading service) opened by a management plane (for example, the NMS 210) may be added, and the server 290 outside the 3GPP network domain 250 is supported in invoking the model training service and the model loading service of the management plane. The third model training request may include the two-side model indication and the indication of requesting the training data used to train the UE-side model, and the third model training report includes the training data used to train the encoder model and the structure information of the encoder model, to support the server 290 outside the 3GPP network domain 250 in training the UE-side model by using the training data provided by the management plane. The model loading request may include the two-side model indication and/or two-side model association information, to indicate that the UE-side model has been deployed, so that deployment and inference of the two-side AI model can be supported.

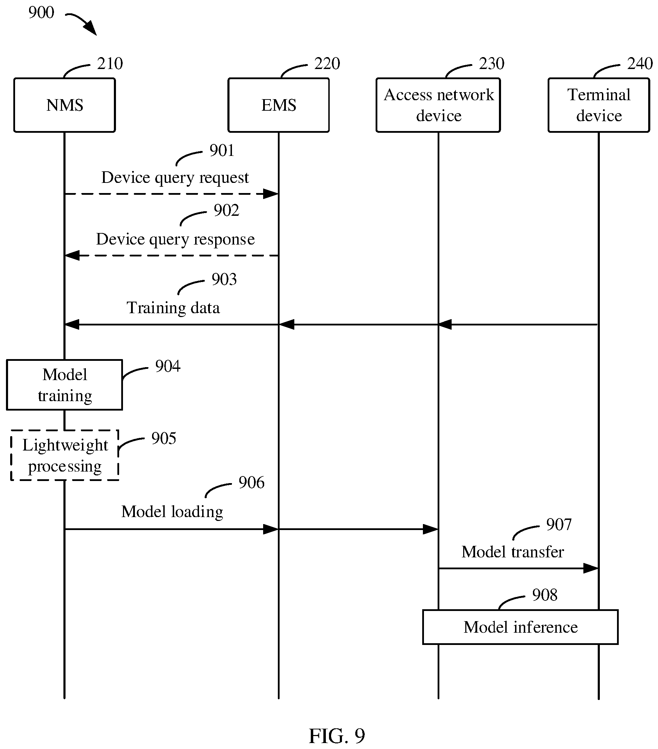

FIG. 9 is still another diagram of signaling exchange 900 according to some embodiments of the present disclosure. In FIG. 9, an NMS 210, an EMS 220, an access network device 230, and a terminal device 240 are related. It may be understood that although the signaling exchange 900 is described with reference to FIG. 2, the process may alternatively be applied to another system. This is not limited in the present disclosure. In FIG. 9, the NMS 210 performs model training, to obtain a part (referred to as an encoder model or a UE-side model) that is in the two-side AI model and that needs to be deployed on the terminal device 240 and a part (referred to as a decoder model or a BS-side model) that is in the two-side AI model and that needs to be deployed on the access network device 230.

Optionally, in step 901, the NMS 210 sends a device query request message to the EMS 220; and in step 902, the EMS 220 sends a device query response message to the NMS 210. Specifically, for 901 and 902, respectively refer to 601 and 602 described with reference to FIG. 6. For brevity, details are not described herein again.

In step 903, the NMS 210 obtains the training data. Specifically, the NMS 210 may obtain, through the EMS 220 and the access network device 230, the training data collected by the terminal device 240. For the process, refer to 805 described with reference to FIG. 8. Details are not described herein again.

In step 904, the NMS 210 performs model training by using the training data to obtain the two-side AI model, where the two-side AI model includes the decoder model (namely, the BS-side model) and the encoder model (namely, the UE-side model). In this manner, the two parts of the two-side AI model may be obtained by the NMS 210 through training, so that a server is not introduced to participate in the training, and there is no need to additionally open a training-related interface or the like to the server, thereby reducing signaling exchange.

Optionally, in 905, the NMS 210 may perform lightweight processing on the two-side AI model. Specifically, the NMS 210 may determine one or more of the following about the decoder model and/or the encoder model based on the device query response message received in 902: a training energy consumption requirement, an inference energy consumption requirement, a model size requirement, or the like. For example, the NMS 210 may determine one or more of the following about the decoder model based on the state information of the access network device 230: a first training energy consumption requirement, a first inference energy consumption requirement, a first model size requirement, or the like. For example, the NMS 210 may determine one or more of the following about the encoder model based on the state information of the terminal device 240: a second training energy consumption requirement, a second inference energy consumption requirement, a second model size requirement, or the like.

For example, the NMS 210 may determine to perform the lightweight processing on the encoder model and/or the decoder model based on the first model performance requirement and/or the second model performance requirement, the first training energy consumption requirement and/or the second training energy consumption requirement, the first inference energy consumption requirement and/or the second inference energy consumption requirement, the first model size requirement and/or the second model size requirement, or the like. For example, the NMS 210 may perform processing such as quantization or pruning on the encoder model and/or the decoder model, to obtain the two-side AI model obtained after the lightweight processing. In this way, the NMS 210 may obtain the trained two-side AI model through 904 or through 904 and 905, and the trained two-side AI model includes the encoder model and the decoder model. It should be noted that although 905 in FIG. 9 is shown as a step independent of 904, 904 may include 905 in some other embodiments, in other words, the lightweight processing may be performed in the model training process.

In step 906, the NMS 210 may load the two-side AI model to the access network device 230 through the EMS 220; and in step 907, the access network device 230 transfers the encoder model to the terminal device 240. For example, the NMS 210 may send a model loading request to the access network device 230.

For example, the NMS 210 may send the model loading request to the EMS 220, and then the EMS 220 forwards the model loading request to the access network device 230. For example, the model loading request includes the decoder model, or includes a model parameter of the decoder model or a file address of a model file of the decoder model. The model loading request further includes the encoder model, or includes a model parameter of the encoder model or a file address of a model file of the encoder model. For example, the model loading request may further include a two-side model indication, a model identifier of the encoder model, a model identifier of the decoder model, an identifier of the access network device 230, and an identifier of a terminal device group.

For example, the access network device 230 may send the encoder model to each terminal device in the terminal device group, including the terminal device 240. In some examples, the access network device 230 may send one or more of the following to the terminal device 240: the encoder model, the two-side model indication, the model identifier of the encoder model, and the model identifier of the decoder model.

In step 908, the two-side AI model may be used in a subsequent model inference process.

With reference to the signaling exchange 900 described in FIG. 9, the NMS 210 can complete model training of the two-side AI model, and the two-side AI model is separately deployed on the terminal device 240 and the access network device 230. In some embodiments, in the training process, both the state information of the access network device and the state information of the terminal device may be considered, so that an appropriate model can be trained based on computing power, storage, and energy consumption requirements of the access network device and the terminal device. The model loading request may include the two-side model indication and/or two-side model association information, so that deployment and inference of the two-side AI model can be supported.

In the foregoing embodiments with reference to FIG. 7 to FIG. 9, the NMS 210 on the management plane performs model training, for example, obtains the trained BS-side model (FIG. 7 or FIG. 8) or obtains the trained two-side AI model (FIG. 9). In the training process, the two-side training indication may be used to ensure matching between the BS-side model and the UE-side model, that is, the matching is used as the two-side AI model. During model deployment, the access network device and the terminal device may determine an association between the BS-side model and the UE-side model by using the two-side indication, to avoid considering the deployed model as a one-side model. In this manner, the matching and association between the BS-side model and the UE-side model in the model inference process can be ensured, thereby ensuring model inference performance.

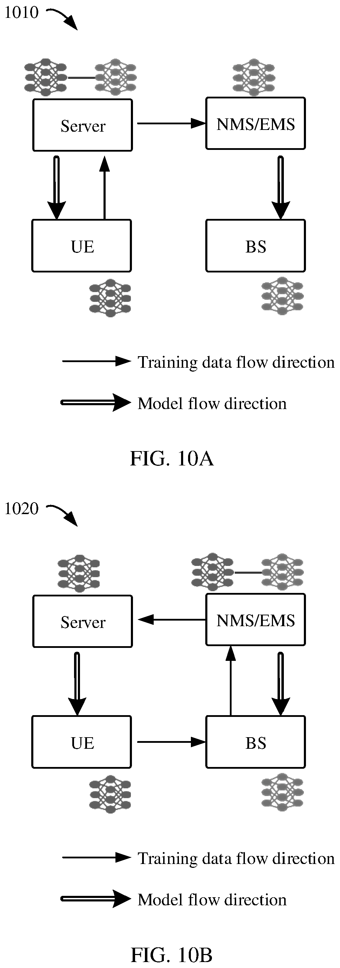

FIG. 10A is a diagram of a training scenario 1010 according to some embodiments of the present disclosure. The scenario 1010 corresponds to the embodiment in which the UE-side model is trained by the server and the BS-side model is trained by the NMS or the EMS, as shown in FIG. 4 or FIG. 7. As shown in FIG. 10A, the server obtains training data from UE, and provides, for the NMS or the EMS, the training data used to train the BS-side model. In addition, the server deploys the trained UE-side model in the UE, and the NMS or the EMS deploys the trained BS-side model in a BS.

FIG. 10B is a diagram of a training scenario 1020 according to some embodiments of the present disclosure. The scenario 1020 corresponds to the embodiment in which the UE-side model is trained by the server and the BS-side model is trained by the NMS or the EMS, as shown in FIG. 5 or FIG. 8. As shown in FIG. 10B, the NMS or the EMS obtains training data from UE through a BS, and provides, for the server, the training data used to train the UE-side model. In addition, the server deploys the trained UE-side model in the UE, and the NMS or the EMS deploys the trained BS-side model in the BS.

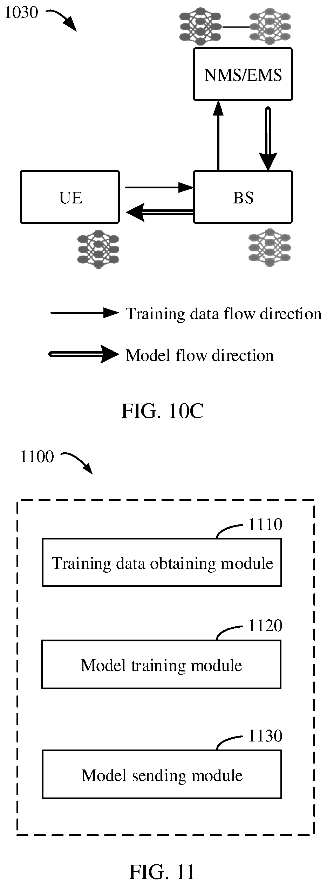

FIG. 10C is a diagram of a training scenario 1030 according to some embodiments of the present disclosure. The scenario 1030 corresponds to the embodiment in which the UE-side model and the BS-side model are trained by the NMS or the EMS, as shown in FIG. 6 or FIG. 9. As shown in FIG. 10C, the NMS or the EMS obtains training data from UE through a BS. In addition, the NMS or the EMS provides both the trained BS-side model and the trained UE-side model for the BS, and then the BS deploys the UE-side model in the UE.

In the example embodiments of the present disclosure as described above, a model training interface for training a two-side AI model, for example, an interface between the server 290 and the NMS 210 or an interface between the NMS 210 and the EMS 220, is enhanced, so that collaboration between the server 290 and the management plane (including the NMS 210 and the EMS 220) can be enhanced; and a model loading interface for loading the two-side AI model, for example, an interface between the server 290 and the NMS 210, an interface between the NMS 210 and the EMS 220, an interface between the NMS 210/the EMS 220 and the access network device 230, or an interface between the server 290 and the terminal device 240, is also enhanced, so that successful deployment of the model can be determined.

In this manner, in this embodiment of the present disclosure, the management plane assists in a training process of the two-side AI model of an air interface, to support use (inference) of the two-side AI model of the air interface.

It should be understood that the embodiments of FIG. 4 to FIG. 10 are described with reference to the system 200 shown in FIG. 2. However, the embodiments of the present disclosure may also be applied to the system 300 shown in FIG. 3 or another system that is not shown in this specification. The embodiments in FIG. 4 to FIG. 10 relate to interaction between different devices (or network elements or systems). However, a specific form of exchanged signaling is not limited in the embodiments of the present disclosure, for example, may be various forms such as a message, a notification, a command, a request, a response, a report, information, or signaling.

It should be understood that although the encoder model and the decoder model are respectively used to represent the UE-side model and the BS-side model in the foregoing embodiments, in an actual case, the two-side AI model is not limited to an architecture of the encoder and the decoder. For example, the two-side AI model may include a first part deployed on the access network device and a second part deployed on the terminal device. For example, the encoder model and the decoder model in the foregoing embodiments may be respectively replaced with the second part and the first part.

It should be further understood that division into the manners, cases, categories, and embodiments in embodiments of the present disclosure is merely for ease of description, and should not constitute a particular limitation. The features in the manners, categories, cases, and embodiments may be combined with each other if logical.

It should be further understood that the foregoing content is merely intended to help a person skilled in the art better understand embodiments of the present disclosure, instead of limiting the scope of embodiments of the present disclosure. A person skilled in the art may make various modifications, variations, combinations, or the like based on the foregoing content. A modified, changed, or combined solution also falls within the scope of embodiments of the present disclosure.

It should be further understood that the foregoing content descriptions focus on differences between embodiments. For same or similar parts, refer to each other. For brevity, details are not described herein again.

FIG. 11 is a block diagram of a network management device 1100 according to some embodiments of the present disclosure. The network management device 1100 may be implemented as the NMS 210 or the EMS 220 shown in FIG. 2, or may be implemented as a part (for example, a chip) or the like of the NMS 210 or the EMS 220. This is not limited in the present disclosure. The network management device 1100 may be implemented as the non-RT RIC 310 or the near-RT RIC 320 shown in FIG. 3, or may be implemented as a part (for example, a chip) or the like of the non-RT RIC 310 or the near-RT RIC 320. This is not limited in the present disclosure. As shown in FIG. 11, the network management device 1100 includes a training data obtaining module 1110, a model training module 1120, and a model sending module 1130.

The training data obtaining module 1110 is configured to obtain training data used to train a first part of a two-side model, where the two-side model includes the first part to be deployed on a network device and a second part to be deployed on a terminal device. The model training module 1120 is configured to perform model training based on the training data to obtain the first part. The model deployment module 1130 is configured to send the first part to the network device. For example, the network device may be the access network device 230 shown in FIG. 2 or the access network device 330 shown in FIG. 3.

In some embodiments, the model training module 1120 may be further configured to perform lightweight processing on the first part; or the network management device 1100 may further include a lightweight processing module, configured to perform lightweight processing on the first part. For example, the lightweight-processed first part meets at least one of the following: a performance requirement for the first part, an energy consumption requirement for training the first part, an energy consumption requirement for an inference task using the first part, or a first model size requirement for the first part.

In some implementations of the present disclosure, the network management device 1100 may be implemented as a second network management device, for example, the EMS 220 or the near-RT RIC 320.

In some examples, the training data obtaining module 1110 is specifically configured to receive a first training request from a first network management device, where the first training request indicates to train the first part of the two-side model, and the first training request includes the training data used to train the first part of the two-side model and structure information of the first part.

In some examples, the network management device 1100 may further include a report module, configured to send a first model training report to the first network management device, where the first model training report includes at least one of the following: a model identifier of the two-side model, a model identifier of the first part, actual performance of the first part, actual training energy consumption of the first part, estimated energy consumption of the inference task using the first part, or an actual model size of the first part.

In some examples, the network management device 1100 may further include a receiving module, configured to receive a model loading request from the first network management device, where the model loading request indicates to load the first part to the network device. The model sending module 1130 may be configured to send the first part to the network device based on the model loading request.

Optionally, the model loading request may include at least one of the following: a first identifier of the network device, the model identifier of the first part, a second identifier of the terminal device, a model identifier of the second part, or the model identifier of the two-side model.

Optionally, the first training request further includes at least one of the following: the model identifier of the two-side model, the model identifier of the first part, the model identifier of the second part, the first identifier of the network device, the second identifier of the terminal device, indication information indicating a type of inference task using the two-side model, a performance requirement for the two-side model, a training energy consumption requirement for the two-side model, the energy consumption requirement for the inference task, the first model size requirement for the first part, or a lightweight indication.

In some examples, the network management device 1100 may further include a request receiving module and a response sending module. The request receiving module is configured to receive a request message from the first network management device, where the request message is used to request state information of the network device. The response sending module is configured to send a response message to the first network management device in response to the request message, where the response message includes at least one of the following: a computing power state of the network device, a storage state of the network device, energy consumption information of the network device, or a network energy consumption target value of the network device.

In some examples, the network management device 1100 may further include a report module, configured to send a second model training report to a first network management device, where the second model training report includes training data used to train the second part and structure information of the second part.

Optionally, the second model training report further includes at least one of the following: a model identifier of the two-side model, a model identifier of the first part, a first identifier of the network device, actual performance of the first part, actual training energy consumption of the first part, estimated energy consumption of the inference task using the first part, an actual model size of the first part, a performance requirement for the second part, a second energy consumption requirement for the inference task using the second part, or a second model size requirement for the second part.

The network management device 1100 is implemented as the second network management device, and can be configured to implement the processes performed by the EMS 220 with reference to FIG. 4 to FIG. 6. For brevity, details are not described herein again.

In some other implementations of the present disclosure, the network management device 1100 may be implemented as a first network management device, for example, the NMS 210 or the non-RT RIC 310.

In some examples, the training data obtaining module 1110 is specifically configured to receive a second training request from a server, where the second training request indicates to train the first part of the two-side model, and the second training request includes the training data used to train the first part of the two-side model and structure information of the first part.

In some examples, the network management device 1100 may further include a report module, configured to send a fourth model training report to the server, where the fourth model training report includes at least one of the following: a model identifier of the two-side model, a model identifier of the first part, or actual performance of the first part.

In some examples, the network management device 1100 may further include a receiving module, configured to receive a notification message from the server, where the notification message indicates that the second part obtained by the server through training has been loaded to the terminal device. The model sending module 1130 may be configured to send the first part to the network device in response to the notification message.

Optionally, the second training request further includes at least one of the following: the model identifier of the two-side model, the model identifier of the first part, a model identifier of the second part, a first identifier of the network device, a second identifier of the terminal device, indication information indicating a type of inference task using the two-side model, or a performance requirement for the two-side model.

In some examples, the network management device 1100 may further include a request sending module and a response receiving module. The request sending module is configured to send a request message to the second network management device, where the request message includes the first identifier of the network device. The response receiving module is configured to receive a response message from the second network management device, where the response message includes at least one of the following: a computing power state of the network device, a storage state of the network device, energy consumption information of the network device, or a network energy consumption target value of the network device.

For example, the network management device 1100 may further include a determining module, configured to determine, based on the response message, at least one of the following: a training energy consumption requirement for the two-side model, a first energy consumption requirement for the inference task using the first part, a second energy consumption requirement for the inference task using the second part, the first model size requirement for the first part, or a second model size requirement for the second part.

In some examples, the network management device 1100 may further include a report module, configured to send a second model training report to a server, where the second model training report includes training data used to train the second part and structure information of the second part.

Optionally, the second model training report further includes at least one of the following: a model identifier of the two-side model, a model identifier of the first part, a first identifier of the network device, actual performance of the first part, actual training energy consumption of the first part, estimated energy consumption of the inference task using the first part, an actual model size of the first part, a performance requirement for the second part, a second energy consumption requirement for the inference task using the second part, or a second model size requirement for the second part.

The network management device 1100 is implemented as the first network management device, and can be configured to implement the processes performed by the NMS 210 with reference to FIG. 7 to FIG. 9. For brevity, details are not described herein again.

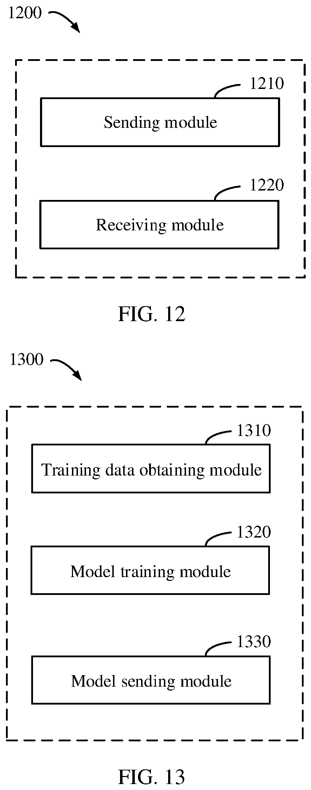

FIG. 12 is a block diagram of a network management device 1200 according to some embodiments of the present disclosure. The network management device 1200 may be implemented as the NMS 210 shown in FIG. 2, or may be implemented as a part (for example, a chip) or the like of the NMS 210. This is not limited in the present disclosure. The network management device 1100 may be implemented as the non-RT RIC 310 shown in FIG. 3, or may be implemented as a part (for example, a chip) or the like of the non-RT RIC 310. This is not limited in the present disclosure. As shown in FIG. 12, the network management device 1200 includes a sending module 1210 and a receiving module 1220.

The sending module 1210 is configured to send a first training request to a second network management device, where the first training request indicates to train a first part of a two-side model, and the two-side model includes the first part to be deployed on a network device and a second part to be deployed on a terminal device. The receiving module 1220 is configured to receive a model training report from the second network management device, where the model training report at least includes a model identifier of the first part.

Optionally, the first training request includes training data used to train the first part and structure information of the first part.

Optionally, the model training report includes a first model training report, and the first model training report includes at least one of the following: a model identifier of the two-side model, the model identifier of the first part, actual performance of the first part, actual training energy consumption of the first part, estimated energy consumption of an inference task using the first part, or an actual model size of the first part.

In some examples, the receiving module 1220 is further configured to receive a second training request from a server, where the second training request indicates to train the first part of the two-side model, and the second training request includes the training data used to train the first part and the structure information of the first part.

Optionally, the model training report includes a second model training report, and the second model training report includes training data used to train the second part and structure information of the second part.

Optionally, the second model training report further includes at least one of the following: a model identifier of the two-side model, the model identifier of the first part, a first identifier of the network device, actual performance of the first part, actual training energy consumption of the first part, estimated energy consumption of an inference task using the first part, or an actual model size of the first part.

In some examples, the sending module of the network management device 1200 may be further configured to forward the second model training report to the server, and the receiving module may be further configured to receive a notification message from the server, where the notification message indicates that the second part has been loaded to the terminal device. The sending module may be further configured to send a model loading request to the second network management device, where the model loading request indicates to load the first part to the network device.

The network management device 1200 is implemented as the first network management device, and can be configured to implement the processes performed by the NMS 210 with reference to FIG. 4 to FIG. 6. For brevity, details are not described herein again.

FIG. 13 is a block diagram of a server 1300 according to some embodiments of the present disclosure. The server 1300 may be implemented as the server 290 shown in FIG. 2, or may be implemented as a part (for example, a chip) or the like of the server 290. This is not limited in the present disclosure. The server 1300 may be implemented as the server 390 shown in FIG. 3, or may be implemented as a part (for example, a chip) or the like of the server 390. This is not limited in the present disclosure. As shown in FIG. 13, the server 1300 includes a training data obtaining module 1310, a model training module 1320, and a model sending module 1330.

The training data obtaining module 1310 is configured to obtain training data used to train a second part of a two-side model, where the two-side model includes a first part to be deployed on a network device and the second part to be deployed on a terminal device. The model training module 1320 is configured to perform model training based on the training data to obtain the second part. The model sending module 1330 is configured to send the second part to the terminal device.

In some examples, the server 1300 further includes a sending module, configured to send a second training request to a first network management device, where the second training request indicates to train the first part of the two-side model, and the second training request includes training data used to train the first part of the two-side model and structure information of the first part.

In some examples, the server 1300 further includes a receiving module, configured to receive a first model training report from the first network management device, where the first model training report indicates that the first part has been obtained through training.

In some examples, the training data obtaining module 1310 is specifically configured to receive a second model training report from a first network management device, where the second model training report includes the training data used to train the second part and structure information of the second part.

Optionally, the second model training report further includes at least one of the following: a model identifier of the two-side model, a model identifier of the first part, a first identifier of the network device, actual performance of the first part, a performance requirement for the second part, a second energy consumption requirement for an inference task using which the second part, or a second model size requirement for the second part.

In some examples, the server 1300 further includes a sending module, configured to send a notification message to the first network management device, where the notification message indicates that the second part has been loaded to the terminal device.

The server 1300 can be configured to implement the processes performed by the server 290 with reference to FIG. 4 and FIG. 5, and FIG. 7 and FIG. 8. For brevity, details are not described herein again.

Division into the modules or the units in this embodiment of the present disclosure is an example, is merely logical function division, and may be other division during actual implementation. In addition, functional units in the disclosed embodiment may be integrated into one unit, each of the units may exist alone physically, or two or more units may be integrated into one unit. The integrated unit may be implemented in a form of hardware, or may be implemented in a form of a software functional unit.

An embodiment of the present disclosure further provides a system. The system may include a first network management device, a second network management device, a server, a network device, and a terminal device. For example, the server may be the server 290 or the server 390, and the server may obtain a second part of a two-side model through model training. For example, the first network management device may be the NMS 210 or the non-RT RIC 310, and may receive a second training request from the server. The first network management device may further send a first training request to the second network management device, or the first network management device may obtain a first part of the two-side model through training. For example, the second network management device may be the EMS 220 or the near-RT RIC 320. The second network management device may receive the first training request from the first network management device, and perform model training based on the first training request, to obtain the first part. For example, the network device may be the access network device 230 or the access network device 330 (for example, the O-CU 332 and the O-DU 334), and may receive the first part from the first network management device or the second network management device. Optionally, the network device may further receive the second part, and send the second part to the terminal device. For example, the terminal device may be the terminal device 240 or 340. The terminal device may receive the second part from the network device, where the second part may be obtained by the server, the first network management device, or the second network management device through training.

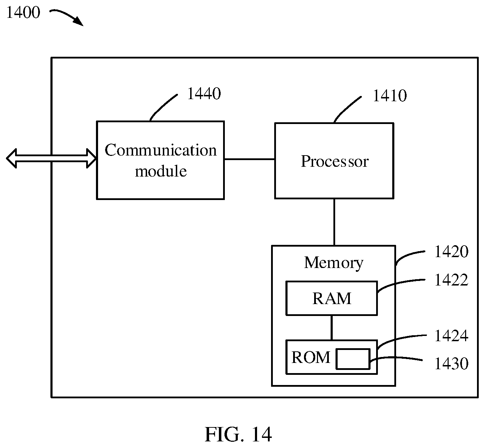

FIG. 14 is a block diagram of an example device 1400 that may be used to implement an embodiment of the present disclosure. The device 1400 may be implemented or included in the foregoing first network management device, second network management device, or server. For example, the device 1400 may be implemented as the NMS 210, the EMS 220, or the server 290 in FIG. 2, or the non-RT RIC 310, the near-RT RIC 320, or the server 390 in FIG. 3.

As shown in FIG. 14, the device 1400 includes one or more processors 1410, one or more memories 1420 coupled to the processor 1410, and a communication module 1440 coupled to the processor 1410.

The communication module 1440 may be configured to perform bidirectional communication. The communication module 1440 may have at least one communication interface for communication. The communication interface may include any interface necessary for communicating with another device.

The processor 1410 may be any type applicable to a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1400 may have a plurality of processors, such as an application-specific integrated circuit chip, which in terms of time, belongs to a clock synchronized with a main processor.

The memory 1420 may include one or more non-volatile memories and one or more volatile memories. An example of the non-volatile memory includes but is not limited to at least one of the following: a read-only memory (Read-Only Memory, ROM) 1424, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 1422, or another volatile memory that does not persist during power-off duration.

A computer program 1430 includes computer-executable instructions executed by the associated processor 1410. The program 1430 may be stored in the ROM 1424. The processor 1410 may perform any proper action and processing by loading the program 1430 into the RAM 1422.

Embodiments of the present disclosure may be implemented by using the program 1430, so that the device 1400 can perform any process discussed with reference to FIG. 4 to FIG. 10. Embodiments of the present disclosure may alternatively be implemented by hardware or a combination of software and hardware.

The program 1430 may be tangibly included in a computer-readable medium, and the computer-readable medium may be included in the device 1400 (for example, in the memory 1420) or another storage device that can be accessed by the device 1400. The program 1430 may be loaded from the computer-readable medium into the RAM 1422 for execution. The computer-readable medium may include any type of tangible non-volatile memory, for example, a ROM, an EPROM, a flash memory, a hard disk, a CD, or a DVD.

In some embodiments, the communication module 1440 in the device 1400 may be implemented as a transmitter and a receiver (or a transceiver), and may be configured to send/receive a training request, a training report, a delivery notification, a loading request, or the like. In addition, the device 1400 may further include one or more of a scheduler, a controller, and a radio frequency/antenna. Details are not described in the present disclosure.

For example, the device 1400 in FIG. 14 may be implemented as an electronic device, or may be implemented as a chip or a chip system in the electronic device. This is not limited in this embodiment of the present disclosure.

An embodiment of the present disclosure further provides a chip. The chip may include an input interface, an output interface, and a processing circuit. In this embodiment of the present disclosure, the input interface and the output interface may complete signaling or data exchange, and the processing circuit may complete generation and processing of the signaling or the data information.

An embodiment of the present disclosure further provides a chip system. The chip system includes a processor, configured to support a compute device in implementing function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of the present disclosure further provides a processor, configured to be coupled to a memory. The memory stores instructions. When the processor runs the instructions, the processor is enabled to perform the method and the function in any one of the foregoing embodiments.

An embodiment of the present disclosure further provides a computer program or a computer program product including instructions. When the computer program or the computer program product is run on a computer, the computer is enabled to perform the method and the function in any one of the foregoing embodiments.

An embodiment of the present disclosure further provides a non-transitory computer-readable storage medium. The non-transitory computer-readable storage medium stores computer instructions. When a processor runs the instructions, the processor is enabled to perform the method and the function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another compute device. Although various aspects of embodiments of the present disclosure are shown and described as block diagrams, flowcharts, or some other figures, it should be understood that the blocks, apparatuses, systems, techniques, or methods described in this specification may be implemented as, for example, non-limiting examples, hardware, software, firmware, dedicated circuits or logic, general-purpose hardware, controllers, other compute devices, or a combination thereof.

The present disclosure further provides at least one computer program product tangibly stored in a non-transitory computer-readable storage medium. The computer program product includes computer-executable instructions, for example, instructions included in a program module, which are executed in a device on a real or virtual target processor, to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be located in a local storage medium and a remote storage medium.

Computer program code for implementing the method disclosed in the present disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in the present disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to the present disclosure may be specific in one apparatus. Instead, features and functions of one apparatus described above may be further specific in a plurality of apparatuses.

The foregoing has described various implementations of the present disclosure. The foregoing descriptions are examples, are not exhaustive, and are not limited to the disclosed implementations. Many modifications and changes are clear to a person of ordinary skill in the art without departing from the scope and spirit of the described implementations. Selection of the terms used in this specification is intended to well explain principles of the implementations, actual applications, or improvements to technologies in the market, or to enable other persons of ordinary skill in the art to understand the implementations disclosed in this specification.

## Claims

1. A model training method, comprising:
obtaining training data used to train a first part of a two-side model, wherein the two-side model comprises the first part to be deployed on a network device and a second part to be deployed on a terminal device;
performing model training based on the training data to obtain the first part; and
sending the first part to the network device.

2. The method according to claim 1, further comprising:
performing lightweight processing on the first part, so that the lightweight-processed first part meets at least one of the following: a performance requirement for the first part, a training energy consumption requirement for the first part, an energy consumption requirement for an inference task using the first part, or a first model size requirement for the first part.

3. The method according to claim 1 or 2, wherein obtaining the training data used to train the first part of the two-side model comprises:
receiving a first training request from a first network management device, wherein the first training request indicates to train the first part of the two-side model, and the first training request comprises the training data used to train the first part of the two-side model and structure information of the first part.

4. The method according to claim 3, further comprising:
sending a first model training report to the first network management device, wherein the first model training report comprises at least one of the following: a model identifier of the two-side model, a model identifier of the first part, actual performance of the first part, actual training energy consumption of the first part, estimated energy consumption of the inference task using the first part, or an actual model size of the first part.

5. The method according to claim 3 or 4, further comprising:
receiving a model loading request from the first network management device, wherein the model loading request indicates to load the first part to the network device; and
sending the first part to the network device based on the model loading request.

6. The method according to claim 5, wherein the model loading request comprises at least one of the following: a first identifier of the network device, the model identifier of the first part, a second identifier of the terminal device, a model identifier of the second part, or the model identifier of the two-side model.

7. The method according to any one of claims 3 to 6, wherein the first training request further comprises at least one of the following:
the model identifier of the two-side model;
the model identifier of the first part;
the model identifier of the second part;
the first identifier of the network device;
the second identifier of the terminal device;
indication information indicating a type of inference task using the two-side model;
a performance requirement for the two-side model;
a training energy consumption requirement for the two-side model;
the energy consumption requirement for the inference task;
the first model size requirement for the first part; or
a lightweight indication.

8. The method according to any one of claims 3 to 7, further comprising:
receiving a request message from the first network management device, wherein the request message is used to request state information of the network device; and
sending a response message to the first network management device in response to the request message, wherein the response message comprises at least one of the following: a computing power state of the network device, a storage state of the network device, energy consumption information of the network device, or a network energy consumption target value of the network device.

9. The method according to claim 1 or 2, wherein obtaining the training data used to train the first part of the two-side model comprises:
receiving a second training request from a server, wherein the second training request indicates to train the first part of the two-side model, and the second training request comprises the training data used to train the first part of the two-side model and structure information of the first part.

10. The method according to claim 9, further comprising:
sending a fourth model training report to the server, wherein the fourth model training report comprises at least one of the following: a model identifier of the two-side model, a model identifier of the first part, or actual performance of the first part.

11. The method according to claim 9 or 10, further comprising:
receiving a notification message from the server, wherein the notification message indicates that the second part obtained by the server through training has been loaded to the terminal device; and
sending the first part to the network device in response to the notification message.

12. The method according to any one of claims 9 to 11, wherein the second training request further comprises at least one of the following:
the model identifier of the two-side model;
the model identifier of the first part;
a model identifier of the second part;
a first identifier of the network device;
a second identifier of the terminal device;
indication information indicating a type of inference task using the two-side model; or
a performance requirement for the two-side model.

13. The method according to any one of claims 9 to 12, further comprising:
sending a request message to the second network management device, wherein the request message comprises the first identifier of the network device;
receiving a response message from the second network management device, wherein the response message comprises at least one of the following: a computing power state of the network device, a storage state of the network device, energy consumption information of the network device, or a network energy consumption target value of the network device; and
determining, based on the response message, at least one of the following: a training energy consumption requirement for the two-side model, a first energy consumption requirement for the inference task using the first part, a second energy consumption requirement for an inference task using the second part, the first model size requirement for the first part, or a second model size requirement for the second part.

14. The method according to claim 1 or 2, further comprising:
sending a second model training report to a first network management device or a server, wherein the second model training report comprises training data used to train the second part and structure information of the second part.

15. The method according to claim 14, wherein the second model training report further comprises at least one of the following: a model identifier of the two-side model, a model identifier of the first part, a first identifier of the network device, actual performance of the first part, actual training energy consumption of the first part, estimated energy consumption of the inference task using the first part, an actual model size of the first part, a performance requirement for the second part, a second energy consumption requirement for an inference task using the second part, or a second model size requirement for the second part.

16. A model training method, comprising:
sending a first training request to a second network management device, wherein the first training request indicates to train a first part of a two-side model, and the two-side model comprises the first part to be deployed on a network device and a second part to be deployed on a terminal device; and
receiving a model training report from the second network management device, wherein the model training report at least comprises a model identifier of the first part.

17. The method according to claim 16, wherein the first training request comprises training data used to train the first part and structure information of the first part.

18. The method according to claim 16 or 17, wherein the model training report comprises a first model training report, and the first model training report comprises at least one of the following: a model identifier of the two-side model, the model identifier of the first part, actual performance of the first part, actual training energy consumption of the first part, estimated energy consumption of an inference task using the first part, or an actual model size of the first part.

19. The method according to claim 17 or 18, further comprising:
receiving a second training request from a server, wherein the second training request indicates to train the first part of the two-side model, and the second training request comprises the training data used to train the first part and the structure information of the first part.

20. The method according to claim 16, wherein the model training report comprises a second model training report, and the second model training report comprises training data used to train the second part and structure information of the second part.

21. The method according to claim 20, wherein the second model training report further comprises at least one of the following: a model identifier of the two-side model, the model identifier of the first part, a first identifier of the network device, actual performance of the first part, actual training energy consumption of the first part, estimated energy consumption of an inference task using the first part, or an actual model size of the first part.

22. The method according to claim 20 or 21, further comprising:
forwarding the second model training report to the server;
receiving a notification message from the server, wherein the notification message indicates that the second part has been loaded to the terminal device; and
sending a model loading request to the second network management device, wherein the model loading request indicates to load the first part to the network device.

23. A model training method, comprising:
obtaining training data used to train a second part of a two-side model, wherein the two-side model comprises a first part to be deployed on a network device and the second part to be deployed on a terminal device;
performing model training based on the training data to obtain the second part; and
sending the second part to the terminal device.

24. The method according to claim 23, further comprising:
sending a second training request to a first network management device, wherein the second training request indicates to train the first part of the two-side model, and the second training request comprises the training data used to train the first part of the two-side model and structure information of the first part.

25. The method according to claim 24, further comprising:
receiving a first model training report from the first network management device, wherein the first model training report indicates that the first part has been obtained through training.

26. The method according to claim 23, wherein obtaining the training data used to train the second part of the two-side model comprises:
receiving a second model training report from a first network management device, wherein the second model training report comprises the training data used to train the second part and structure information of the second part.

27. The method according to claim 26, wherein the second model training report further comprises at least one of the following: a model identifier of the two-side model, a model identifier of the first part, a first identifier of the network device, actual performance of the first part, a performance requirement for the second part, a second energy consumption requirement for an inference task using the second part, or a second model size requirement for the second part.

28. The method according to any one of claims 23 to 27, further comprising:
sending a notification message to the first network management device, wherein the notification message indicates that the second part has been loaded to the terminal device.

29. A model training method, comprising:
performing, by a first network management device, the method according to any one of claims 16 to 22, and
performing, by a second network management device, the method according to any one of claims 1 to 8.

30. The method according to claim 29, further comprising:
performing, by a server, the method according to any one of claims 23 to 28.

31. The method according to claim 29 or 30, further comprising:
receiving, by a network device, a first part, of a two-side model, obtained by the second network management device through training;
receiving, by the network device, a second part of the two-side model from the server;
sending, by the network device, the second part to a terminal device; and
receiving, by the terminal device, the second part from the network device.

32. A model training method, comprising:
performing, by a first network management device, the method according to any one of claims 1 and 2, and 9 to 15; and
performing, by a server, the method according to any one of claims 23 to 28.

33. The method according to claim 32, further comprising:
receiving, by a network device, a first part, of a two-side model, obtained by the first network management device through training;
receiving, by the network device, a second part of the two-side model from the server;
sending, by the network device, the second part to a terminal device; and
receiving, by the terminal device, the second part from the network device.

34. A communication apparatus, comprising a module or a component configured to perform the method according to any one of claims 1 to 28.

35. A system, comprising:
a first network management device, configured to perform the method according to any one of claims 16 to 22; and
a second network management device, configured to perform the method according to any one of claims 1 to 8.

36. The system according to claim 35, further comprising:
a server, configured to perform the method according to any one of claims 23 to 28.

37. The system according to claim 35 or 36, further comprising:
a network device, configured to:
receive a first part, of a two-side model, obtained by the second network management device through training;
receive a second part of the two-side model from the server; and
send the second part to a terminal device; and
the terminal device, configured to receive the second part from the network device.

38. A system, comprising:
a first network management device, configured to perform the method according to any one of claims 1 and 2, and 9 to 15; and
a server, configured to perform the method according to any one of claims 23 to 28.

39. The system according to claim 38, further comprising:
a network device, configured to:
receive a first part, of a two-side model, obtained by the first network management device through training;
receive a second part of the two-side model from the server; and
send the second part to a terminal device; and
the terminal device, configured to receive the second part from the network device.
